(19) Europäisches Patentamt
European Patent Office
Office européen des brevets

(11) **EP 4 394 328 B1**

(12) **EUROPEAN PATENT SPECIFICATION**

(45) Date of publication and mention
of the grant of the patent:
**03.06.2026 Bulletin 2026/23**

(21) Application number: **23219248.4**

(22) Date of filing: **21.12.2023**

(51) International Patent Classification (IPC):
**G01D 3/08** $^{(2006.01)}$        **G01D 5/14** $^{(2006.01)}$

(52) Cooperative Patent Classification (CPC):
**G01D 5/145; G01D 3/08;** G01D 2218/10

(54) **METHOD OF DIAGNOSING, AND A SENSOR DEVICE WITH SELF-DIAGNOSTIC FUNCTION**

VERFAHREN ZUR DIAGNOSE UND SENSORVORRICHTUNG MIT SELBSTDIAGNOSEFUNKTION

PROCÉDÉ DE DIAGNOSTIC ET DISPOSITIF DE DÉTECTION À FONCTION D'AUTODIAGNOSTIC

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.12.2022 EP 22217443**

(43) Date of publication of application:
**03.07.2024 Bulletin 2024/27**

(73) Proprietor: **Melexis Technologies SA
2022 Bevaix (CH)**

(72) Inventors:
• **LEROY, Sébastien
2022 Bevaix (CH)**
• **TOMBEZ, Lionel
2022 Bevaix (CH)**

(74) Representative: **Jacobs, Lambert
Inventrans BV
Overwegstraat 24
3740 Bilzen (BE)**

(56) References cited:
**DE-A1- 102014 109 956    US-A1- 2018 188 071
US-A1- 2022 404 438**

**Description**

**Field of the invention**

The present invention relates in general to the field of sensor devices having self-diagnostics or self-test capabilities, and more in particular to sensor devices (e.g. magnetic sensor devices) having an angle calculator (e.g. a single angle calculator) and capabilities to detect an error of that angle calculator. The present invention also relates to methods of testing such a sensor device, and to systems using such a sensor device.

**Background of the invention**

Electronic components are being heavily used in automotive applications, not only for entertainment purposes (such as e.g. music), or assistance functions (such as e.g. electric mirror, or parking assistance), electronic sensors are also being used for steering assistance, engine control, and other safety-related functions. Evidently, the requirements in terms of reliability and system availability for such functions continues to increase, and safety standards (such as e.g. the SIL standard) are being developed, while at the same time pressure on costs remains high.
In order to meet safety standards, such as for example ASIL standards ("Automotive safety integrity level") or other safety standards in the automotive field, it is desired to implement and use corresponding self-tests, including built-in self-tests, not only at start-up but also during normal operation, as well as automatic monitoring structures or corresponding redundant functional blocks and/or signal paths.
Conventional sensor systems, in particular magnetic sensor systems, use a single-channel analog main signal path. Other conventional solutions use two identical sensors and processing paths to meet ASIL requirements. Obviously, a considerable drawback of such solutions is the corresponding doubling of the cost for providing not only one but two sensors and processing circuitry.
US2012074972 discloses a monolithic integrated circuit sensor system comprising a first sensor device having a first signal path for a first sensor signal on a semiconductor chip; and a second sensor device having a second signal path for a second sensor signal on the semiconductor chip, the second signal path being distinct from the first signal path, wherein a comparison of the signal from the first signal path and the signal from the second signal path provides a sensor system self-test.
US2022404438A1 discloses a method and device for performing a consistency test of a magnetic sensor.
US2018188071A1 discloses another method for performing a consistency test of a magnetic sensor.
There is always room for improvements or alternatives.

**Summary of the invention**

It is an object of embodiments of the present invention to provide a method of testing or detecting an error of a sensor device having an angle calculator and having at least one or at least two sensors.
It is also an object of embodiments of the present invention to provide a sensor device having an angle calculator and capabilities to detect an error of that angle calculator.
It is an object of embodiments of the present invention to provide a method of testing or detecting an error of a magnetic sensor device having a single angle calculator and having at least two magnetic sensors, or having at least two groups of magnetic sensors.
It is an object of embodiments of the present invention to provide a method and a sensor device that is capable of detecting a fault condition during normal operation of the sensor device.
It is an object of embodiments of the present invention to provide a sensor device having only one angle calculator, and a method of testing that single angle calculator.
It is an object of embodiments of the present invention to provide a method of detecting an error in a more reliable way, e.g. using a method that also works for fast-changing input signals.
It is an object of embodiments of the present invention to provide a simple solution, e.g. with minimal additional circuitry (e.g. in terms of redundancy), and/or with minimal added complexity.
It is an object of particular embodiments of the present invention to provide a method and a sensor device for testing not only the angle calculator, but also a divider and/or a multiplier and/or an absolute_value function comprised in the sensor device.
It is also an object of embodiments of the present invention to provide a magnetic position system comprising such a sensor device and a permanent magnet.
These and other objectives are accomplished by embodiments of the present invention.
According to a first aspect, the present invention provides a method of testing a sensor device that comprises one or more magnetic sensor elements and a single angle calculator as defined in claim 1.

The "angle calculator" may be referred to as an "angle calculator circuit" (e.g. when mainly implemented in hardware) or may be referred to as an "angle calculator module" (e.g. when mainly implemented in software), or may be implemented partially in hardware and partially in software (e.g. using a look-up table with linear interpolation).

It is noted that the sensor device may perform steps a) to c) periodically, e.g. once in each time period, but the steps d) to f) do not need to be performed in each time period. Whether steps d) to f) are performed or not, may be predetermined (e.g. once per 5 time periods, or once per 10 or 15 or 20 or 25 or 50 or 100 or 200 or 500 time periods), and/or may depend on the at least one digitized signal (e.g. is skipped if the digitized signal has an absolute value larger than a predetermined value).

As is well known in the art, an angle value can be expressed in radians or in degrees, e.g. a right angle corresponds to $\pi/2$ rad and 90°.

The angle calculator is preferably a digital angle calculator.

According to the invention, the second input value (IN2) is obtained using a reversible predefined transformation of the first input value, e.g. based on the formula f(x)=1/x.

In an embodiment, the first set of input values (IN1) is a first pair of values, and the second set of input values (IN2) is a second pair of values, e.g. by reversing the order of the two values, or e.g. having numerical values different from those of the first pair.

In an embodiment, the method further comprises: outputting the first angle value ($\alpha$) by the magnetic sensor device to another processing device (e.g. an ECU).

In an embodiment, the method further comprises: outputting the first angle value ($\alpha$) and the second angle ($\beta$) by the magnetic sensor device to another processing device (e.g. an ECU).

In an embodiment, the method further comprises: outputting the first angle value ($\alpha$) and a diagnostic signal indicative of an error being detected by the magnetic sensor device to another processing device (e.g. an ECU).

In an embodiment, the angle calculator is configured to estimate or to determine an arctangent function with one argument or an arctangent function with two arguments.

The arctangent function with one argument is typically written as arctan(). The arctangent function with two arguments is typically written as arctan2() or atan2(). These "functions" may be implemented in the analog domain, or the digital domain, e.g. by evaluating a polynomial expression, or using a look-up table with or without interpolation, or using an iterative approach.

In an embodiment, step b) further comprises: storing the first digital signal (e.g. s1) in a first data register, and storing the second digital signal (e.g. s2) in a second data register; and wherein the first input value or the first set of input values (e.g. IN1) of step c), and the second input value or the second set of input values (e.g. IN2) of step d) are derived from the same numerical values as those stored in the first and second data register.

In an embodiment, the angle calculator comprises a divider and an arctangent calculator; and step c) comprises: calculating the first input value (e.g. IN1) by dividing the first digital signal (e.g. s1) by the second digital signal (e.g. s2), and providing the first input value (e.g. IN1) to the arctangent calculator for calculating the first angle value (e.g. $\alpha$); and step d) comprises: calculating the second input value (e.g. IN2) and providing the second input value (e.g. IN2) to the arctangent calculator for calculating the second angle value (e.g. $\beta$); and step e) comprises: testing whether a sum of the first angle value (e.g. $\alpha$) and the second angle value (e.g. $\beta$) is substantially equal to a first or a second predefined constant within a predefined tolerance margin, e.g. within a predefined tolerance margin of $\pm 10°$, or $\pm 6°$, or $\pm 2°$.

In an embodiment, the first predefined constant may be equal to +90° (or +$\pi/2$), and the second predefined constant may be equal to -90° (or -$\pi/2$).

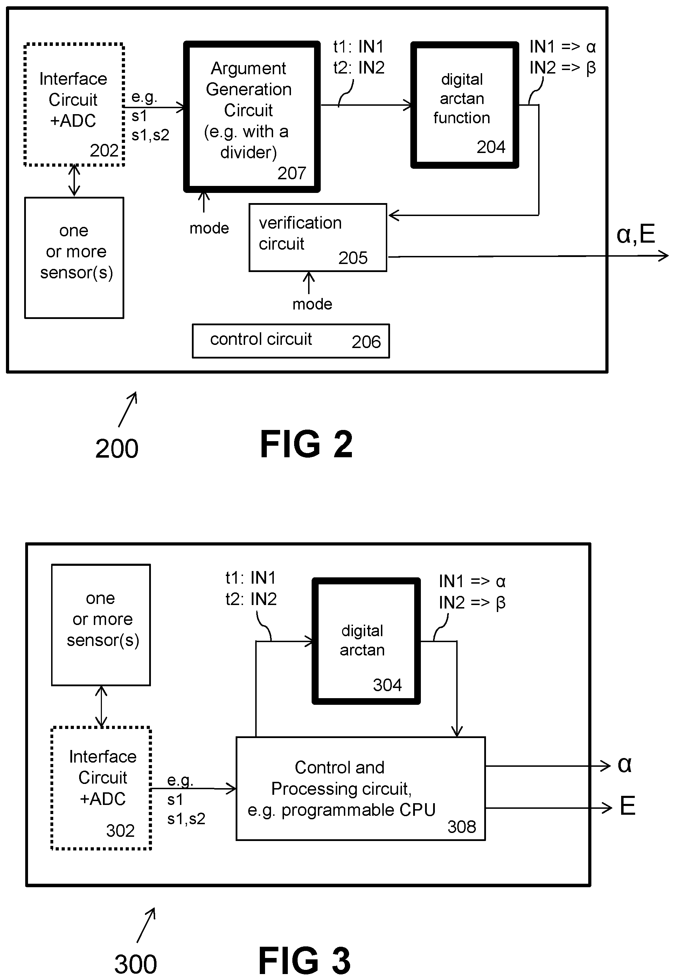

An example of this embodiment is illustrated in FIG. 2, where e.g. two sensor signals are measured and temporarily stored in a digital register (or temporarily held by a sample-and-hold circuit in front of the digitizer), and a first angle $\alpha$ is calculated as arctan(signal1/signal2), and a second angle $\beta$ is calculated as arctan(signal2/signal1), as can be achieved e.g. by swapping the values in the digital registers prior to performing the division, or by rerouting the signals from the sample-and-hold circuit towards the digitizer, or in other suitable manners obtaining the same effect.

In an embodiment, step e) comprises: testing if said sum is substantially equal to +90° in case a sign of the first digital sensor value and a sign of the second digital sensor value are equal; and testing if said sum is substantially equal to -90° in case the sign of the first digital sensor value and the sign of the second digital sensor value are different.

In an embodiment, the angle calculator comprises a divider and an arctangent calculator; and step c) comprises: calculating the first input value (e.g. IN1) by dividing the first digital signal (e.g. s1) by the second digital signal (e.g. s2), and providing the first input value (e.g. IN1) to the arctangent calculator for calculating the first angle value (e.g. $\alpha$); and the method further comprises a step of testing whether an absolute value of the first input value (e.g. IN1) is smaller than 1.0; and if an outcome of this test is false, skipping steps d) to step f); and if the outcome of this test is true, calculating in step d) the second input value (e.g. IN2) in accordance with the formula IN2=2*IN1/(1-IN1*IN1), and testing in step e) whether the first angle value (e.g. $\alpha$) is substantially equal to the second angle value (e.g. $\beta$) divided by 2.0, e.g. within a tolerance margin of $\pm 10°$, or $\pm 6°$, or $\pm 2°$.

It is an advantage of this embodiment that it not only tests the arctangent function, but also the square function, and the division-function.

In an embodiment, the angle calculator comprises a divider and an arctangent calculator; and step c) comprises: calculating the first input value (e.g. IN1) by dividing the first digital signal (e.g. s1) by the second digital signal (e.g. s2), and providing the first input value (e.g. IN1) to the arctangent calculator for calculating the first angle value (e.g. $\alpha$); and step d) comprises: calculating the second input value (e.g. IN2) in accordance with the formula IN2= (sqrt(IN1*IN1+1)-1)/IN1, and testing in step e) whether the first angle value (e.g. $\alpha$) is substantially equal to the second angle value (e.g. $\beta$), e.g. within a tolerance margin of $\pm 10°$, or $\pm 6°$, or $\pm 2°$.

In an embodiment, the angle calculator comprises a divider and an arctangent calculator; and step c) comprises: calculating the first input value (e.g. IN1) as N times the first digital signal (e.g. s1), or as N times the second digital signal (e.g. s2), or as N times the first digital signal (e.g. s1) divided by the second digital signal (e.g. s2), and providing the first input value (e.g. IN1) to the arctangent calculator for calculating the first angle value (e.g. $\alpha$), wherein N is a predefined number (e.g. N=0.5 or N=2.0 or 3.0 or 2.5 or 4.75 or any other number); and wherein step d) comprises: calculating the second input value (e.g. IN2) in accordance with the formula IN2= (sqrt(N*N*IN1*IN1+1)-1)/ (N*IN1), and testing in step e) whether the first angle value (e.g. $\alpha$) is substantially equal to 2.0 times the second angle value (e.g. $\beta$), e.g. within a tolerance margin of $\pm 10°$, or $\pm 6°$, or $\pm 2°$.

The method may further comprise steps for calculating the arctangent value of the digitized signal itself, resulting in a third angle gamma, which may also be provided as an output.

In an embodiment, the value of the known number N is 0.5.

In an embodiment, the value of the known number N is 2.

In an embodiment, the value of the known number N is 3.

In an embodiment, the value of N is dynamically varied, e.g. by periodically selecting values from a predefined list.

According to a second aspect, the present invention also provides a magnetic sensor device as defined in claim 8.

In an embodiment, the magnetic sensor device further comprises said first and second data register.

The sensor elements of a sensor device according to the second aspect may be selected from the group consisting of: magnetic sensor elements, horizontal Hall elements, vertical Hall elements, magneto-resistive elements (e.g. GMR, XMR, AMR), magneto-impedance elements (e.g. GMI), optical sensor elements, a MEMs element, an accelerometer sensor.

The sensor device according to the second aspect may be an angular or a linear position sensor device, a tilt sensor, etc.

According to a third aspect, the present invention also provides a magnetic position sensor system as defined in claim 15.

In an embodiment, the magnetic position sensor system further comprises a second processor, e.g. in the form of an electronic control unit (e.g. ECU), and the magnetic sensor device is configured for providing at least the first angle (e.g. $\alpha$) to the second processor, and optionally also one or more of the following: the error signal, the second angle (e.g. $\beta$), the second input value or the second set of input values (e.g. IN2), a ratio of the second input values.

The scope of the invention is defined by the appended independent claims. Particular and preferred aspects of the invention are set out in the accompanying dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

**FIG. 1** shows a high level block diagram of a known magnetic sensor device comprising a divider and an angle calculator, but without self-diagnostics.

**FIG. 2** shows a high level block diagram of an illustrative example of a sensor device according to an embodiment of the present invention.

**FIG. 3** shows a high level block diagram of another illustrative example of a sensor device according to an embodiment of the present invention.

**FIG. 4** shows a high level block diagram of yet another illustrative example of a sensor device according to an embodiment of the present invention.

**FIG. 5** to **FIG. 8** shows examples of timing-diagrams that may be used in embodiments of the present invention.

**FIG. 9** shows an example of a magnetic sensor system according to an embodiment of the present invention.

**FIG. 10** shows another example of a magnetic sensor system according to an embodiment of the present invention.

**FIG. 11A** shows an illustrative example of a sine and a cosine waveform as a function of angular displacement, as may be measured by the sensors of the sensor device of FIG. 9.

**FIG. 11B** shows that the sum of arctangent(Bx/By) and arctangent(By/Bx) is substantially equal to a first constant (+ $\pi/2$) or a second constant (- $\pi/2$), if the arctangent function returns a value in the range from - $\pi/2$ to + $\pi/2$.

**FIG. 12** shows a variant of FIG. 11B, in case the arctangent function returns a value in the range from 0 to $\pi$.

**FIG. 13A** shows an example of another magnetic sensor system which does not fall under the scope of the present invention, wherein the sensor device comprises a first group of magnetic sensor elements located on a virtual circle, and a second group of magnetic sensor elements located at the centre of the circle.

**FIG. 13B** shows a sensor arrangement that may be used in the sensor device of FIG. 13A.

**FIG. 14** shows a variant of FIG. 13A, using a first group of four pairs of horizontal Hall elements arranged on the circle, and using a second group of four pairs of horizontal Hall elements arranged near an integrated flux concentrator (IMC) located at the centre of the circle.

**FIG. 15A** shows an example of waveforms as may be measured by the sensor elements of FIG. 13A or FIG. 14, or derived therefrom.

**FIG. 15B** shows that the sum of arctangent(Bx/By) and arctangent[(dBz/dv),(dBz/vu)] is substantially equal to a first constant or a second constant.

**FIG. 16** shows a variant of FIG. 15B, in case the arctangent function returns a value in the range from $\pi$ to +$\pi$.

**FIG. 17** to **FIG.** 19 are flow-charts of methods according to embodiments of the present invention. **FIG. 20** is a flow-chart of a method which does not fall under the scope of the present invention.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, unless explicitly mentioned otherwise, the term "sensor device" refers to a semiconductor device, packaged or unpackaged, comprising at least one "sensor element". The sensor device may be comprised in a package, also called "chip", although that is not absolutely required. The sensor device preferably contains a semiconductor substrate.

In this document, the term "magnetic sensor element" or "magnetic sensor" can refer to a component or a group of components or a sub-circuit or a structure capable of measuring a magnetic quantity, such as for example a magneto-resistive (MR) element, a GMR element, an XMR element, a horizontal Hall plate, a vertical Hall plate, a Wheatstone-bridge containing at least one (but preferably four) magneto-resistive elements, etc. or combinations hereof.

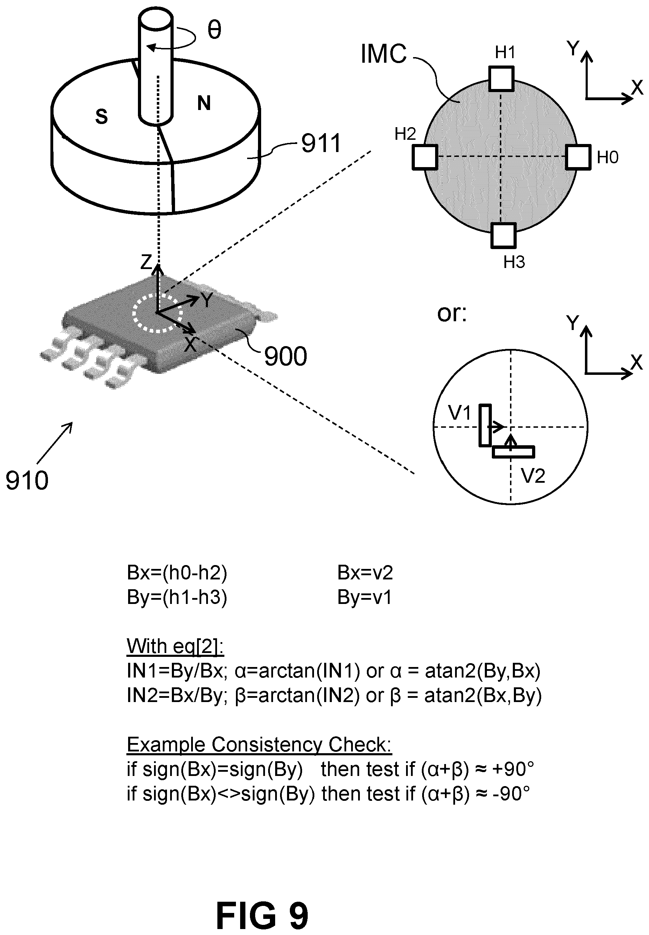

In certain embodiments of the present invention, the term "magnetic sensor" or "magnetic sensor structure" may refer to an arrangement comprising one or more integrated magnetic concentrators (IMC), also known as integrated flux concentrators, and one or more horizontal Hall elements arranged near the periphery of the IMC, for example a disk shaped IMC with two horizontal Hall elements 180° spaced apart from each other (not shown), or an IMC with four horizontal Hall elements spaced apart by multiples of 90° (e.g. as shown in FIG. 9).

In this document, the expression "in-plane component of a magnetic field vector" and "projection of the magnetic field vector in the sensor plane" mean the same. If the sensor device comprises a substrate, this also means "magnetic field component parallel to the substrate". In-plane components are typically referred to as Bx and By.

In this document, the expression "out-of-plane component of a vector" and "Z component of the vector" and "projection of the vector on an axis perpendicular to the sensor plane" mean the same. This component is typically referred to as Bz.

In this document, the word "magnet", "magnetic structure" and "magnetic source" are used as synonyms.

Embodiments of the present invention are typically described using an orthogonal coordinate system which is fixed to the sensor device, and having three axes X, Y, Z, where the X and Y axis are parallel to the substrate, and the Z-axis is perpendicular to the substrate.

In this document, the expression "spatial derivative" or "derivative" or "spatial gradient" or "gradient" are used as synonyms. In the context of the present invention, a gradient of a certain component (e.g. By) "along the X-direction" is typically determined as a difference (e.g. $\Delta By$) between two such component values (e.g. By1, By2) measured at two locations spaced apart in the X-direction. In theory the gradient (e.g. dBy/dx) is calculated as the difference (e.g. $\Delta By$) between two values divided by the distance "dx" between the sensor locations, but in practice the division by "dx" is often omitted, because the measured signals need to be scaled anyway. Hence, in the context of the present invention, the magnetic field difference (e.g. $\Delta By$) and the magnetic field gradient (e.g. dBy/dx) are used interchangeably.

In this application, horizontal Hall plates are typically referred to by H1, H2, etc.; signals from horizontal Hall plates are typically referred to by h1, h2, etc.; vertical Hall plates are typically referred to by V1, V2, etc.; and signals from vertical Hall plates are typically referred to by v1, v2, etc.

In the context of the present invention, the functions arctan() and atan2() are both referred to as "arctangent function". The first function arctan(R) receives a single argument (e.g. R). The single argument R may be a ratio of two values x/y, but that is not absolutely required. In this case, the division operation is performed outside of the arctan function. The second function atan2(x,y) receives two arguments, and a division is implicitly performed inside the atan2 function.

The present invention is related to sensor devices having self-diagnostics or self-test capabilities, and more in particular to magnetic sensor devices having a single "angle calculator" (e.g. hardware circuit or software module) and having capabilities to detect an error of that angle calculator. The present invention is also related to methods of testing such a sensor device, in particular the angle calculator thereof, by the sensor device itself.

As mentioned in the background section, a classical approach to test if a particular function of a sensor device is still functioning properly, is to provide two identical signal paths, route the same input signals to both signal paths, and compare the outputs. A disadvantage of this approach is that it requires duplicating the actual function, which typically requires a larger circuit (e.g. larger chip area).

Another classical approach is to store a limited number of predefined input values, and corresponding known good output values, and to apply one of these predefined input values to the function (e.g. circuit block or software module) to be tested, and test if the actual output value corresponds with the expected predefined output value. This approach has as main disadvantage that the number of predefined input and output values is limited, and requires extra storage space (e.g. in flash). Another disadvantage is that performing the test may interrupt the normal output stream of periodic measurements.

The inventors of the present invention came to the idea of testing the angle calculator in a different way, namely:

- by operating a single angle calculator twice: a first time with a first input value (or set of input values) IN1 resulting in a first angular output (e.g. $\alpha$), and a second time with a second input value (or a second set of input values) IN2 resulting in a second angular output (e.g. $\beta$);
- wherein the first input value (or set of input values) IN1 is/are not predefined values, but is/are derived from the sensor signal(s), and thus are typically varying over time;
- and wherein the second input value(s) IN2 have a first predefined (e.g. mathematical and/or geometrical) relationship with the first input value(s) IN1, chosen such that the output values also have a second predefined (e.g. mathematical and/or geometrical) relationship (if everything is working correctly);
- and by detecting an error if the calculated first and second angular value do not satisfy the second predefined relationship.

In preferred embodiments, the sensor device has at least two magnetic sensors configured to provide quadrature signals, e.g. individually or in combination, and the signals obtained from these sensors are amplified (and preferably also sensitivity-corrected in manners known in the art), and digitized, and the digital values are temporarily stored in two (or more) data-registers, and a first set of input values (or a single first input value, a first ratio of two amplified and digitized sensor signals) for calculating the first angle $\alpha$ is retrieved or derived from the values stored in these data-registers, and a second set of input values (or a second input value, a second ratio of two amplified and digitized sensor signals) for calculating the second angle $\beta$ is retrieved or derived from the same values stored in said data-registers, before a new data acquisition occurs. This offers the advantage that the first angle $\alpha$ and the second angle $\beta$ are derived from the same numerical values that were stored in the data registers. This offers the advantage that the first angle $\alpha$ and the second angle $\beta$ are highly consistent, even for a fast changing magnetic field (e.g. induced by a magnet rotating at high speed).

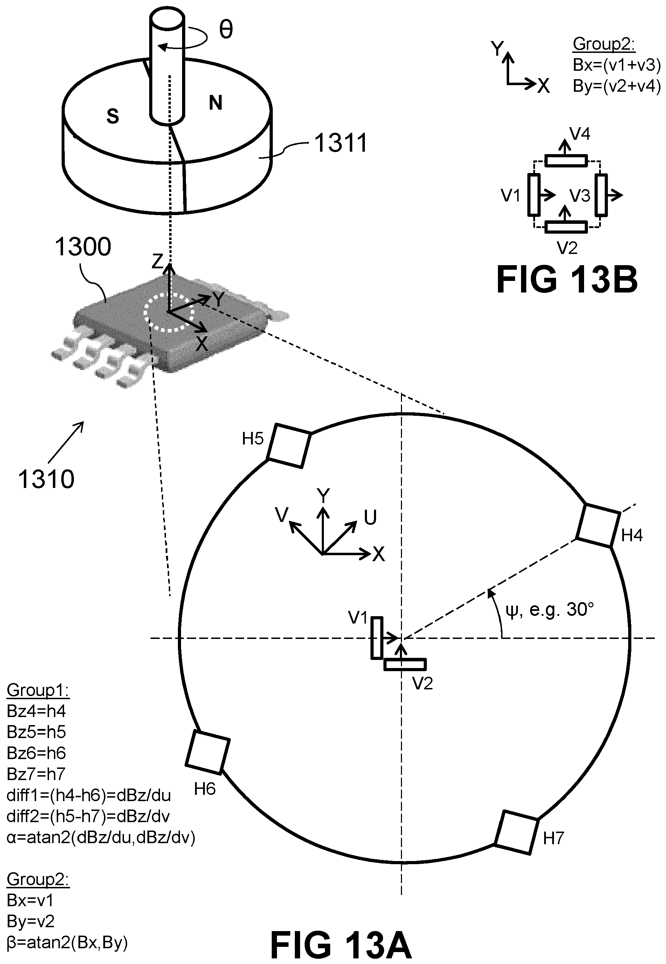

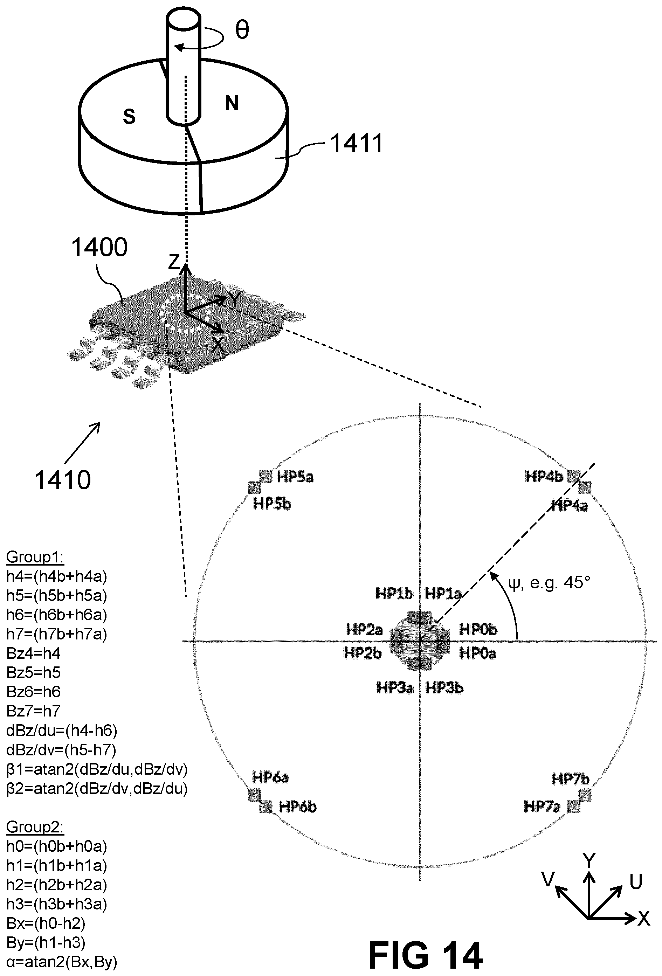

In other preferred examples not falling under the scope of the present invention, (e.g. illustrated in FIG. 13A, FIG. 13B, FIG. 14), the sensor device has at least two groups of magnetic sensors, each group configured for providing quadrature signals, e.g. individually or in combination. The first angle $\alpha$ may be derived from the first set of quadrature signals, the second angle $\beta$ may be derived from the second set of quadrature signals. A mathematical relationship between the first angle $\alpha$ and the second angle $\beta$ may be defined by the geometric positions and/or orientations of the sensor elements.

When signals from various sensor elements are to be combined (e.g. added or subtracted), such combinations are preferably performed in the analog domain, before amplification.

These are the main principles underlying the present invention.

Referring now to the Figures.

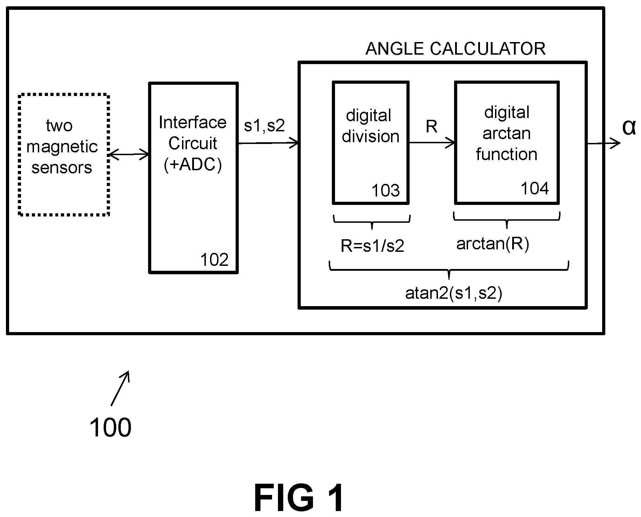

**FIG. 1** shows a high level block diagram of a magnetic sensor device 100, known in the art. The sensor device 100 comprises two magnetic sensors; an interface circuit 102 comprising a "biasing and readout circuit" and an analog-to-digital convertor (ADC); a digital divider 103 for performing a digital division operation on the digitized sensor signals and for providing a ratio R, and a circuit 104 for determining an arctangent function of the ratio R. The sensor device 100 of FIG. 1 does not have a self-diagnostic function.

In fact, two "arctangent functions" are known in the art: a "single-argument" arctangent function written as arctan(R), and a two-argument arctangent function written as atan2(s1,s2) or as arctan2(s1,s2). As illustrated, the "two-argument arctangent" function can be considered as a combination of a digital division function and a "single-argument arctangent" function.

When in the present invention the term "angle calculator" is used with a single argument, it usually refers to the single-argument arctangent function (excluding the division), unless it is clear from the context that something else was meant. When in the present invention the term "angle calculator" is used with two arguments, it usually refers to the two-argument arctangent function (including the division) unless it is clear from the context that something else was meant. When the term "angle calculator" is used without explicitly mentioning one or two arguments, either the single-argument arctangent function and the two-argument arctangent function is referred to. In a practical implementation, the "angle calculator" typically also tests whether the envisioned denominator s2 is different from zero, before performing the division, and may add or subtract multiples of 180° (or $\pi$ radians) from the output of the arctan function block 104, depending on the sign of the two arguments s1, s2, but such aspects are implementation details which are well known in the art. Relevant for the present invention is that the "angle calculator" of FIG. 1 comprises a digital arctan function 104 and also a digital divider 103.

The functional blocks 103 and 104 can be implemented fully in hardware, e.g. as two dedicated hardware blocks, or can be implemented in software modules running on a digital processor, e.g. a simple microcontroller (CPU) or a digital signal processor (DSP). The arctan function may for example be implemented by means of a look-up table stored in a non-volatile memory (e.g. flash memory) with or without linear interpolation. The function blocks shown in FIG. 1 should therefore not be interpreted as hardware circuit, but may also be fully or partially be implemented as "software modules" or "software routines".

**FIG. 2** shows a high level block diagram of an illustrative example of a sensor device 200. This sensor device 200 comprises one or more sensors, e.g. at least two sensors, e.g. selected from the group consisting of magnetic sensors, micro-electromechanical (MEMs) sensors, accelerometer sensors, gyroscopic sensors, for example two sensors oriented in orthogonal directions for determining a direction of a magnetic field, or a direction of force, or a direction of acceleration. The sensor device 200 further comprises an interface circuit 202 with an analog-to-digital convertor ADC. Depending on the type of sensor(s), the interface circuit 202 may comprise for example a "biasing and readout circuit" or only a readout circuit, e.g. a Wheatstone bridge. The interface circuit 202 provides one or more digital signals, e.g. only s1, or s1, s2, derived from one or more sensor signals, e.g. by amplification and digitization. The sensor device 200 further comprises a functional block 204 (e.g. hardware circuit or software routine) for determining an arctangent function, which may be identical to the circuit 104 of FIG. 1, or to the angle calculator of FIG. 1, or may be different.

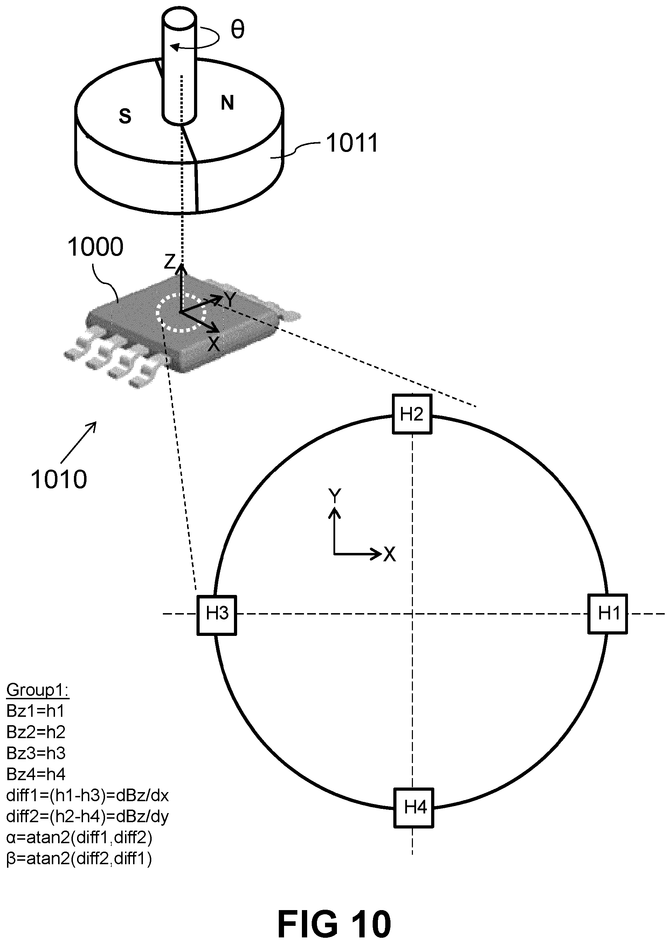

According to an underlying principle of the present invention, however, the arctangent function block 204 is provided with a first input IN1 (e.g. a single digital value or a set of two digital values) at a first moment in time t1, yielding a first angle value $\alpha$, and is provided with a second input IN2 (e.g. a single digital value or a set of two digital values) at a second moment in time t2, yielding a second angle value $\beta$. Both the first input IN1 and the second input IN2 are derived from the sensor signals. They may be based on the same numerical values derived from the same sensor signals (see e.g. FIG. 9, FIG. 10), e.g. captured at a particular moment in time, and temporarily stored in data registers, or based on two different sets of numerical values obtained from different sensor signals (see e.g. FIG. 13A, FIG. 14).

The value or the set of values IN1 and IN2 are typically different from each other, apart from exceptions, but they have a predefined first relationship, e.g. a first mathematical relationship in accordance with a first predefined function involving IN1 and IN2. This relationship may be imposed by a control circuit 206, in manners known in the art, e.g. using a programmable microcontroller or a finite state machine, etc. The sensor device 200 further comprises a verification block 205 configured for receiving the first and the second angle value $\alpha$, $\beta$ and for testing if they are consistent, by testing if they satisfy a predefined second relationship, e.g. a second mathematical relationship in accordance with a second predefined function involving $\alpha$ and $\beta$.

As an example, assume that the interface circuit 202 provides two digital signals s1 and s2, and that the first input IN1 is calculated as s1/s2, and that the second input IN2 is calculated as s2/s1. This results in a first angle $\alpha$=arctan(s1/s2) and a second angle $\beta$=arctan(s2/s1), wherein the arctan function is calculated by a single functional block 204 operated twice. By testing the second relationship between $\alpha$ and $\beta$, in this case, by testing whether the sum of $\alpha$ and $\beta$ is substantially equal to one of two predefined constants, apart from rounding errors, a fault can be detected. In hindsight, the skilled reader may recognize that this example is built on the following mathematical formula:

$$\text{arctan}(x) + \text{arctan}(1/x) = 90°, \text{ if } x > 0 \qquad [1a]$$

$$\text{arctan}(x) + \text{arctan}(1/x) = -90°, \text{ if } x < 0 \qquad [1b]$$

but the present invention is not directed to these mathematical formulas per se, nor is it limited to this particular mathematical formula, and solutions based on other mathematical identity formulas can also be used, such as for example:

$$\text{arctan}(s1/s2) + \text{arctan}(s2/s1) = 90°, \text{ if } s1 \text{ and } s2 \text{ have a same sign} \qquad [2a]$$

$$\text{arctan}(s1/s2) + \text{arctan}(s2/s1) = -90°, \text{ if } s1 \text{ and } s2 \text{ have opposite sign} \qquad [2b]$$

or:

$$\text{arctan}(x) = \frac{1}{2} \text{arctan}\left(\frac{2.x}{1-x^2}\right), \text{ for values } -1 < x < +1; \qquad [3]$$

or

$$\text{arctan}(x) = 2\,\text{arctan}\left(\frac{\sqrt{x^2+1}-1}{x}\right), \text{ for values } x <> 0; \qquad [4]$$

or

$$\arctan(2x) = 2\arctan\left(\frac{\sqrt{4x^2 + 1} - 1}{2x}\right) \text{, for values } x<>0; \quad [5]$$

or

$$\arctan(\text{N}x) = 2\arctan\left(\frac{\sqrt{\text{N}^2 x^2 + 1} - 1}{\text{N}\,x}\right) \text{, for values } x<>0; \quad [6]$$

where N is a predefined real number, for example N=2, or N=2.5, or N=3, or N=0.5, or N=0.25, or any other suitable number different from zero, and where the value of x is derived from one or more of the sensor signals, for example x=(s1/s2) in combination with [3] or [4], or for example x=s1/(2*s2) in combination with [5], or for example x=s1/(N*s2) in combination with [6], or

$$\arctan(x/y) = \begin{cases} 2\arctan\left(\dfrac{y}{\sqrt{x^2+y^2}+x}\right) & \text{if } x > 0, \\[2ex] 2\arctan\left(\dfrac{\sqrt{x^2+y^2}-x}{y}\right) & \text{if } x \le 0 \text{ and } y \ne 0, \\[2ex] \pi & \text{if } x < 0 \text{ and } y = 0, \\ \text{undefined} & \text{if } x = 0 \text{ and } y = 0. \end{cases} \quad [7]$$

As can be seen, the formulas [1] to [3] require a division and an arctangent, but not a square function or a square root function. These are simpler to implement, and require a less powerful processing circuit and/ processor. The formulas [4] to [7] require a division, and an arctangent, and a square function, and a square root function, and thus are more complex.

On the other hand, an implementation based on the formulas [4] to [7] is not only capable to detect an error in the division function and the arctangent function, but is furthermore capable to detect an error in the square function and the square root function. An implementation based on the formulas [4] to [7] may therefore be preferred in sensor devices where a norm (sum of squares) of the sensor signals is also required.

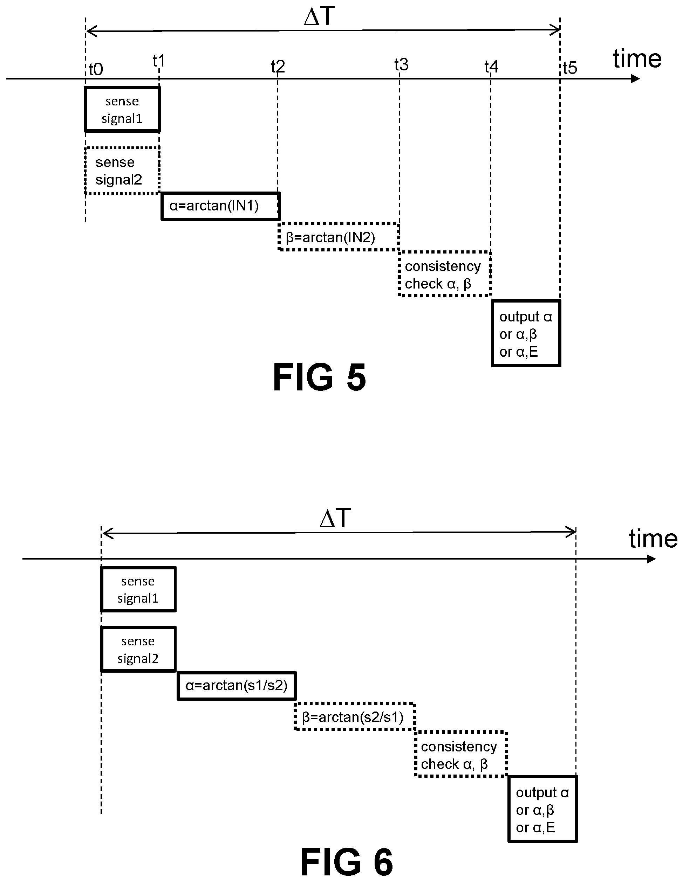

In many applications, it is not required to diagnose the circuit for each new sensor signal obtained from the one or more sensor(s), but it suffices to test the circuit once in a while, or only for certain values but not for other values. This will be discussed further in FIG. 5 to FIG. 8.

In the sensor device of FIG. 2, the verification is performed inside the sensor device 200 itself, and the sensor device will typically output the first angle α, and a diagnostic signal E (e.g. error signal) for indicating that an error has been detected.

In a variant, the verification of the consistency between the angles α and β is not only performed by the device itself, but is also performed outside of the sensor device, e.g. in an electronic control unit (ECU) connected to the sensor device. In this case, the sensor device 200 would output the two angle values α and β to the external control unit (not shown), e.g. via a communication bus, and the external control unit may or would also verify whether the two angle values α and β satisfy the second predefined relationship.

The block diagram of FIG. 2 is only a schematic representation of the various functions of the sensor device 200, but does not necessarily represent a circuit block diagram. Indeed, other circuit topologies for performing the same functions can also be used, and some or all of these functions may be performed in software, for example as will be described next.

**FIG. 3** shows a high level block diagram of another sensor device 300, which can be seen as a variant or a special case of the sensor device 200 of FIG. 2. The device 300 has one or more sensors, e.g. at least two magnetic sensors, and an interface circuit 302 comprising at least one analog-to-digital convertor (ADC), and has a dedicated arctangent block 304 (e.g. implemented in hardware or in software, or partially in hardware and partially in software, e.g. by means of a look-up table with linear interpolation), and wherein most of the other functions (e.g. the generation of the input signals IN1, IN2) are performed by a programmable processor, e.g. by a microcontroller (CPU) or by a digital signal processor (DSP). Everything else described above for FIG. 2 is also applicable here. For example, the consistency check may be performed inside the sensor device 300, in which case the sensor device would output the first angle $\alpha$ and the diagnostics signal E, and optionally but not necessarily the second angle value $\beta$. Optionally, the consistency check may also be performed outside the sensor device 300, e.g. by an external processor, e.g. an electronic control unit (ECU) communicatively connected to the sensor device 300, in which case the sensor device 300 would output at least the two angle values $\alpha$ and $\beta$. In the latter case, the external processor (not shown) would receive the values $\alpha$ and $\beta$, and would perform the consistency check. Of course, it is also possible to perform the consistency check both inside and outside of the sensor device 300. This is also true for the sensor device of FIG. 2. As mentioned above, it is not required to perform the consistency check for each measured sample, although it may.

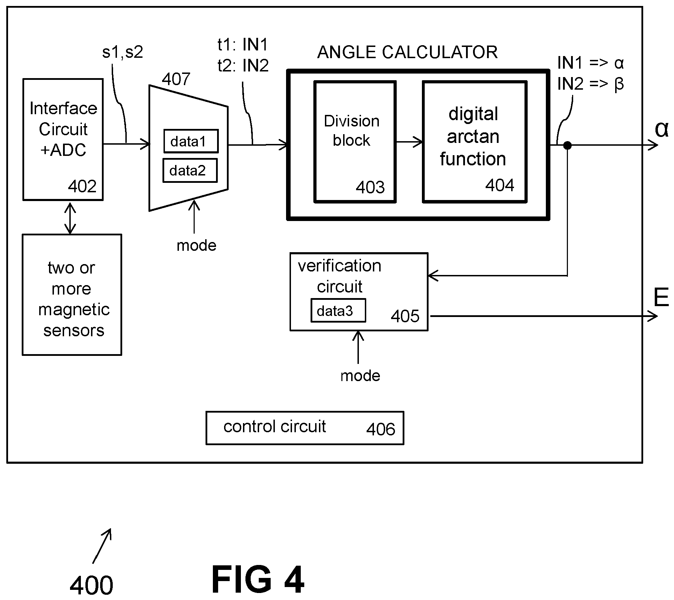

**FIG. 4** shows a high level block diagram of yet another illustrative example of a sensor device 400, which can be seen as a variant or a special case of the sensor device 200 of FIG. 2, and which is based on the mathematical equations [2a],[2b] mentioned above.

More specifically, the sensor device 400 comprises at least two sensors, e.g. two magnetic sensors, or two pairs of magnetic sensors, or two groups of magnetic sensors, configured or arranged for providing two quadrature signals (i.e. sinusoidal signals having substantially the same amplitude and being substantially 90° phase shifted). The sensor signals are obtained by the interface circuit 402, e.g. in case of magnetic sensors typically referred to as a "biasing and readout circuit", and are digitized by one or more analog-to-digital convertors ADC. In practice, the signals may also be amplified, etc. but such aspects are well known in the art, and are not the main focus of the present invention.

Important for the embodiment of FIG. 4 is that the interface circuit 402 provides at least one pair of two digital signals s1, s2 (for example a sine value and a cosine value) to the "argument generation circuit" 407, which in the example of FIG. 4 could be a very simple block comprising two data-registers data1, data2 and means for swapping the content of these data registers in the digital domain. At a first moment in time t1, the "angle calculator" is provided with a first set of input signals IN1 for calculating atan2(sine,cosine) which results in a first angle value $\alpha$, which angle value is stored in a third data register data3 in the verification circuit 405. Then the contents of the data registers data1 and data2 are swapped or rerouted in a crossed manner such that, at time t2, the "angle calculator" is provided with a second set of input signals IN2 for calculating atan2(cosine,sine) which results in a second angle value $\beta$, which value is also provided to the verification circuit 405, where a sum of the two angle values $\alpha$ and $\beta$ is determined, and where it is verified whether the sum is substantially equal to a first predefined constant or is substantially equal to a second predefined constant, taking into account some margin for rounding errors. The first constant may be equal to +90° or $+\pi/2$ (rad), the second constant may be equal to -90° or $-\pi/2$ (rad), depending on the implementation in degrees or radians. If it is detected that the sum $(\alpha+\beta)$ deviates more than an allowed tolerance margin, the verification circuit 405 has detected an error, which can then be output by means of a diagnostic signal or an error signal E.

This embodiment can be described in a compact manner as follows:

$$
\begin{cases}
\alpha = \arctan(s1/s2) \\
\beta = \arctan(s2/s1) \\
\text{Test if } (\alpha+\beta) \approx +90° \text{ or } (\alpha+\beta) \approx -90°
\end{cases}
$$

where '$\approx$' means: is approximately equal to, within a predefined tolerance margin.

If an "absolute value function" is available, this embodiment can also be described as follows:

$$
\begin{cases}
\alpha = \arctan(s1/s2) \\
\beta = \arctan(s2/s1) \\
\text{Test if } abs(\alpha+\beta) \approx +90°
\end{cases}
$$

where abs() is the absolute value function.

The waveforms of FIG. 10A and FIG. 10B illustrate this in a graphical manner.

It is a major advantage of this technique that it requires only minimal additional hardware and/or software, and that it can be applied in a sensor device having only one angle calculator. It is also a major advantage that the input signals are derived from sensor signals, and are not merely predefined values with a predefined result. In this way, the reliability may be increased, for example because the probability of finding an error somewhere in a look-up table is increased.

Many variants of this embodiment are possible, for example:

i) instead of having an ADC in the interface circuit, and two data-registers data1, data2, and means for swapping or rerouting their contents, it is also possible to obtain the same functionality using two "sample-and-hold" circuits in front of the ADC, and by routing at a first moment in time the two signals in a first manner to the angle calculator, and by routing at a second moment in time the two signals in a crossed manner to the angle calculator.

ii) instead of actually adding the two angles $\alpha$ and $\beta$, and testing whether the sum is substantially equal to constant1 or constant2, it is (of course) also possible to calculate a third value value3 equal to ($\beta$ - constant1), and to calculate a fourth value value4 equal to ($\beta$ - constant2), and to test whether the first angle $\alpha$ is substantially equal to the third value value3 or substantially equal to the fourth value value4, within a predefined tolerance margin, e.g. within a tolerance margin of $\pm5°$, or $\pm3°$, or $\pm1°$.

iii) a more stringent verification test could be the following: in case the sign of the two digital values obtained from the interface circuit are the same (i.e. both positive or both negative), test if ($\alpha+\beta$) $\approx$ +90°; and in case the sign of the two digital values obtained from the interface circuit are opposite (i.e. one positive and the other negative), test if ($\alpha+\beta$) $\approx$ -90°.

iv) another way of testing iii) is the following: determine a fifth value value5 equal to sign(s1)*sign(s2)*90°, where sign() is the sign function, which returns the value of +1 for positive arguments, and -1 for negative arguments; then test if ($\alpha +\beta$) $\approx$ value5.

v) yet another way of testing iii) is the following: determine a fifth value value5 equal to sign(s1*s2)*90°, where sign() is the sign function, which returns the value of +1 for positive arguments, and -1 for negative arguments; then test if ($\alpha+\beta$) $\approx$ value5.

Example with eq[3] and only one sensor:

From the above, it can be understood that "a diagnostic test based on equation [3]", and using a sensor device as illustrated in FIG. 2 or FIG. 3 having only a single sensor, may comprise the following steps:

i) measure a physical quantity using the single sensor;
ii) digitize the sensor signal, and call this signal x;
iii) at time t1, apply the signal x as a first input value IN1 to the digital arctan function, yielding a first angle $\alpha$=arctan(IN1);

if the absolute value of (x) is $\geq$ 1.0, skip the diagnostic test;
if the absolute value of (x) is < 1.0, perform the following steps:

iv) calculate a second input value IN2 equal to (2x) /(1-$x^2$);
v) at time t2, provide the second input value IN2 to the digital arctan function, yielding a second angle $\beta$ =arctan(IN2);
vi) test if $\alpha \approx \beta$/2, and if the outcome of this test is false, an error is detected

It is noted that the first angular value $\alpha$ and the second angular value $\beta$ may not have a physical meaning if the single sensor is for example a temperature sensor, and the value x is for example a normalized value of x (e.g. divided by a predefined upper limit), but it may still be very useful to detect an error of the single-argument arctangent function using such a single sensor value, which varies over time.

Example with eq[3] and two sensors:

A diagnostic test based on equation [3], and using a sensor device as illustrated in FIG. 2 or FIG. 3 and having two sensors, may comprise the following steps:

i) measure two physical quantities using the two sensor;
ii) digitize the sensor signals, and call them s1, s2;
iii) calculate a value x equal to s1/s2;

if the absolute value of (x) is $\geq$ 1.0, skip the diagnostic test;
if the absolute value of (x) is < 1.0, perform the following steps:

iv) calculate a second input value IN2 equal to (2x) /(1-$x^2$);
v) at time t2, provide the second input value IN2 to the digital arctan function, yielding a second angle $\beta$ =arctan(IN2);

vi) test if $\alpha \approx \beta/2$, and if the outcome of this test is false, an error is detected

In a variant, if it is found (in step iii) that (x)>1, then x is calculated as s2/s1 instead, and steps iv) to vi) are performed with the latter value of x, and if it is found that (x)=1, then the diagnostic test is skipped.

Example with eq[4] and only one sensor:

A diagnostic test based on equation [4], and using a sensor device as illustrated in FIG. 2 or FIG. 3 and having only one sensors, may comprise the following steps:

i) measure a physical quantity using the single sensor;
ii) digitize the sensor signal, and call this signal x;
iii) at time t1, apply the signal x as a first input value IN1 to the digital arctan function, yielding a first angle $\alpha$=arctan(IN1);

iv) calculate a second input value IN2 equal to $$IN2= \left( \frac{\sqrt{x^2 + 1} - 1}{x} \right)$$

v) at time t2, provide the second input value IN2 to the digital arctan function, yielding a second angle $\beta$ =arctan(IN2);
vi) test if $\alpha \approx 2*\beta$, and if the outcome of this test is false, an error is detected

Example with eq[4] and two sensors:

A diagnostic test based on equation [4], and using a sensor device as illustrated in FIG. 2 or FIG. 3 and having two sensors, may comprise the following steps:

i) measure two physical quantities using the two sensor;
ii) digitize the sensor signals, and call them s1, s2;
iii) calculate a value x equal to s1/s2;
iv) at time t1, apply the signal x as a first input value IN1 to the digital arctan function, yielding a first angle $\alpha$=arctan(IN1);

v) calculate a second input value IN2 equal to $$IN2= \left( \frac{\sqrt{x^2 + 1} - 1}{x} \right)$$

vi) at time t2, provide the second input value IN2 to the digital arctan function, yielding a second angle $\beta$ =arctan(IN2);
vii) test if $\alpha \approx 2*\beta$, and if the outcome of this test is false, an error is detected

Example with eq[5] and only one sensor or two sensors:

Such a diagnostic test is similar to the "diagnostic test based on equation [4] and only one sensor" or similar to the "diagnostic test based on equation [4] and two sensors", except that the first input value IN1 is calculated as 2x, and the second input value IN2 is calculated as

$$IN2= \left( \frac{\sqrt{4x^2 + 1} - 1}{2x} \right)$$

While this embodiment can be used to diagnose certain functions of the sensor device, the angles $\alpha$ and $\beta$ thus calculated are typically not the values of interest for the actual application (e.g. angular position to be determined), and thus an additional evaluation of arctan(x) may be required to obtain the angle $\alpha$ of interest.

Example with eq[6]:

The same remarks as for the example with eq[5] are applicable.

Example with eq[7]:

A diagnostic test based on equation [7], and using a sensor device having two sensors, may comprise the following steps:

i) measure two physical quantities using the two sensors;
ii) digitize the sensor signals, and call them x and y;
iii) if (y=0), skip the diagnostic test, otherwise continue;
iv) calculate IN1 = x/y, and at time t1 apply the first input value IN1 to the digital arctan function, yielding a first angle $\alpha$=arctan(x/y);

v) if (x≤0), calculate IN2 as $IN2 = \left( \frac{\sqrt{x^2+y^2}-x}{y} \right)$ if (x>0), calculate IN2 as $IN2 = \left( \frac{y}{\sqrt{x^2+y^2}+x} \right)$

vi) at time t2, provide the second input value IN2 to the digital arctan function, yielding a second angle $\beta$ =arctan(IN2);
vii) test if $\alpha \approx 2*\beta$, and if the outcome of this test is false, an error is detected.

In other or further variants of the embodiments described above, the sensor device comprises two sensor groups, e.g. a first sensor group configured for providing sensor signals s1, s2, and a second sensor group configured for providing sensor signals s3, s4. A first angle $\alpha$ may be calculated based on the first set of sensor signals s1, s2; and a second angle $\beta$ may be calculated based on a second set of sensor signals s3, s4; and the consistency test may test a predefined mathematical relationship between the first angle and the second angle, taking into account a geometrical position of the respective sensor elements, e.g. an angular offset between the first sensor group and the second sensor group. Examples of such embodiments will be shown in FIG. 13A, FIG. 13B and FIG. 14.

**FIG. 5** to **FIG. 8** show illustrative examples of timing-diagrams that may be used in embodiments of the present invention, but of course, these are only examples, and other suitable timing schemes may also be used.

**In FIG. 5,** at time t0, one or more sensor signal(s) are obtained. At time t1 a first angle $\alpha$ is calculated by applying a first input value IN1 to the digital arctan function block. At time t2 a second angle $\beta$ is calculated by applying a second input value IN2 to the digital arctan function block. At time t3 a consistency check of the first angle $\alpha$ and the second angle $\beta$ is performed. At time t4 the value of the first angle $\alpha$ may be output, or the first angle $\alpha$ and also the second angle $\beta$, or the first angle $\alpha$ and an error signal E (e.g. the outcome of the consistency test). These steps may be performed repeatedly, e.g. periodically, in each time period $\Delta$T, but as already mentioned above, that is not absolutely required, and it may suffice to perform a consistency test only in some periods, and skip the consistency test in other periods, or to perform the consistency test only for a certain value range.

**FIG. 6** is a specific example of a timing diagram that may be applied in the sensor circuit of FIG. 4, or in the sensor circuits of FIG. 2 and FIG. 3 having at least two sensors and configured to perform a diagnostic test based on equations [2a],[2b].

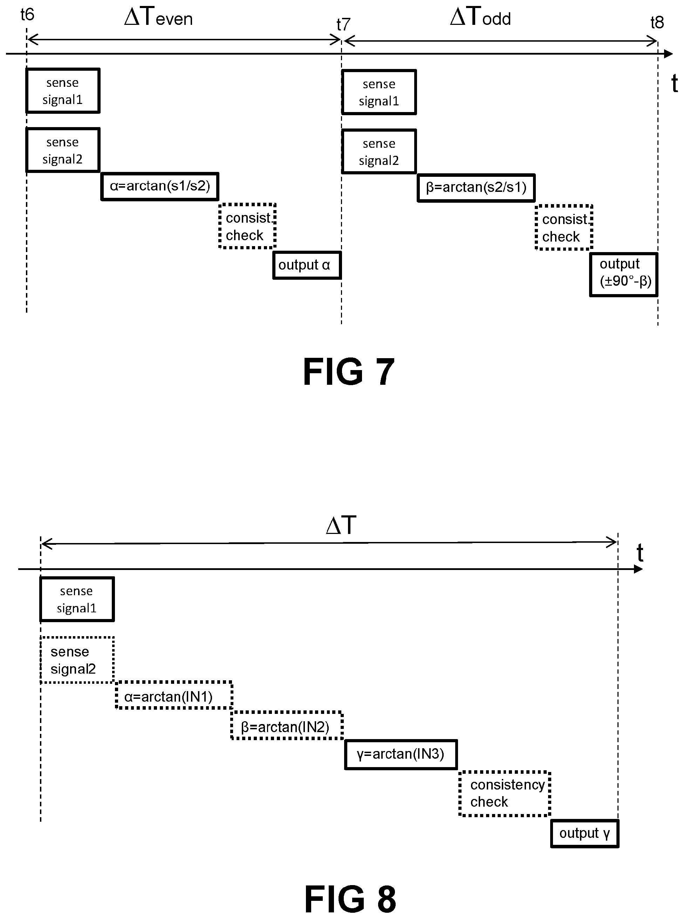

**FIG. 7** is a specific example of a timing diagram that may be applied in the sensor circuit of FIG. 4, or in the sensor circuits of FIG. 2 and FIG. 3 having at least two sensors and configured to perform a diagnostic test based on equations [2a],[2b]. In this example, in each time period $\Delta$T, two signals are measured, but only one angle is calculated: in even numbered timeslots, the first angle $\alpha$ is calculated by applying a first input value IN1 to the digital arctan function block; in odd numbered timeslots, the second angle $\beta$ is calculated by applying a second input value IN2 to the digital arctan function block. In the even numbered timeslots the angle $\alpha$ may be output, and in the odd numbered timeslots, an angle (90°-$\beta$) or (-90°-$\beta$) may be output, depending on the sign of the signals s1 and s2, as described above.

It is important to note that in this scheme, the first angle $\alpha$ is based on signals measured at time t6, whereas the second angle $\beta$ is calculated based on signals measured at time t7, which are usually slightly different from the signals measured at time t6. The consistency check therefore may take into account a larger tolerance margin to cope not only with rounding errors, but also with a certain change of the angle over the time period $\Delta$T. An advantage of this scheme is that it may allow to output the measured angle at a faster rate, while performing a consistency check in each timeslot, but as already mentioned above, that is not absolutely required.

In a variant (not shown) of FIG. 7, at time t6 two sensor signals s1, s2 are provided by a first sensor group, and a first angle $\alpha$ is calculated based on these signals s1, s2, e.g. in accordance with the formula $\alpha$=arctan(s1/s2); and at time t7 two sensor signals s3, s4 are provided by a second sensor group, and a second angle $\beta$ is calculated based on these signals s3, s4, e.g. in accordance with the formula $\beta$=arctan(s3/s4), and a consistency test may comprise testing if a difference between $\alpha$ and $\beta$ is substantially equal (e.g. within a predefined tolerance margin of at most $\pm$20° or at most $\pm$15° or at most $\pm$10°) to a predefined angular offset $\psi$. This offset value $\psi$ may correspond for example with a geometric offset between the two sensor groups (e.g. as illustrated in FIG. 13A or FIG. 14), but of course other offset values different from 30° or 45° may also be used.

**FIG. 8** shows another example of a timing scheme that may be applied for example in embodiments based on equations [5] or [6], where for example $\alpha$ and $\beta$ are calculated to perform a consistency check as described above, but the angles $\alpha$ and $\beta$ may not be the relevant angle for the application. However, by choosing IN3 equal to s1/s2, for example, and by calculating a third angle $\gamma$ as arctan(IN3), the value of gamma $\gamma$ may be the relevant angle for that application. In this example, the consistency check would be performed on the angles $\alpha$ and $\beta$. In a variant of FIG. 8, the order of calculating the three angles $\alpha$, $\beta$, $\gamma$, may be changed. As explained above, it is not required to perform a consistency check in every time slot, in which case the calculation of $\alpha$, and the calculation of $\beta$, and performing the consistency check may be skipped (as indicated in dotted lines).

**FIG. 9** shows an example of a magnetic sensor system 910, comprising a permanent magnet 911 movably mounted with respect to a sensor device 900. The magnet may be a two-pole magnet, e.g. an axially or diametrically magnetized ring or disk magnet, or a two-pole bar magnet. The sensor device comprises a semiconductor substrate, and at least two magnetic sensor elements for measuring two orthogonal magnetic field components Bx, By oriented parallel to the semiconductor substrate.

In an example, the sensor device 900 comprises two vertical Hall elements, including a first vertical Hall element V1 having an axis of maximum sensitivity oriented in the X-direction, and a second vertical Hall element V2 having an axis of maximum sensitivity oriented in the Y-direction. The sensor element V1 provides a signal v1 indicative of the magnetic field component Bx, and the sensor element V2 provides a signal v2 indicative of the magnetic field component By.

In another example, the sensor device 900 comprises a disk shaped integrated magnetic concentrator (IMC) and four horizontal Hall elements H1 to H4 arranged near the periphery of the IMC, and angularly spaced by multiples of 90°. The sensor elements H1 to H4 provide sensor signals h1 to h4 respectively. The difference between the signals h0 and h2 is indicative for the magnetic field component Bx oriented in the X-direction. The difference between the signals h1 and h3 is indicative for the magnetic field component By oriented in the Y-direction.

As described above, a first angle $\alpha$ is calculated by applying a first input value IN1 equal to By/Bx to the digital arctan function block. A second angle $\beta$ is calculated by applying a second input value IN2 equal to Bx/By to the digital arctan function block. Preferably the values of Bx, By are measured once, and stored in digital registers, such that the value of $\alpha$ and $\beta$ are derived from the exact same numerical values. By doing so, the consistency test provides a specific test to verify correct operation of the "angle calculator" (and the routing path from the data registers to the angle calculator), but not the sensors. By testing whether the sum of $\alpha$ and $\beta$ is equal to one of two predefined constants, within a predefined tolerance margin for coping with rounding errors, an error of the angle calculator can be detected. Other tests, e.g. as described above, using the sign() function, may also be used.

The block-diagram of FIG. 9 shows an angular position sensor system 910, wherein the magnet is rotatable about a rotation axis, and wherein the sensor device 900 is mounted in an "on-axis position" (i.e. located on the rotation axis), and wherein the sensor elements e.g. V1, V2 are configured for providing quadrature signals corresponding to orthogonal magnetic field components, but the present invention is not limited thereto, and also works for an angular position sensor system in which the sensor device is mounted in an "off-axis position" (i.e. at a non-zero radial distance from the rotation axis) and/or wherein the magnet is magnetized in a different direction (e.g. diametrically magnetized), and also works for linear position sensor systems.

**FIG. 10** shows an example of another magnetic position sensor system 1010, which can be seen as a variant of the system 910 of FIG. 9. The sensor device 1000 comprises four horizontal Hall elements H1 to H4, located on a virtual circle. Each of these Hall elements is configured for measuring a magnetic field component Bz oriented perpendicular to the semiconductor substrate of the sensor device at the respective locations. It is possible to derive two quadrature signals, by calculating a first signal s1 as a difference (diff1) between the signals h1 and h3 obtained from the sensor elements H1 and H3 respectively, and by calculating a second signal s2 as a difference (diff2) between the signals h2 and h4 obtained from the sensor elements H2 and H4 respectively. It is noted that s1 = (h1-h3) is proportional to the gradient signal dBz/dx, and that s2=(h2-h4) is proportional to the gradient signal dBz/dy.

The signals s1 and s2 allow not only to determine the angular position of the magnet relative to the sensor device, but also allow to perform a diagnostic test of the sensor device 1000, more specifically of the "angle calculator" thereof, comprising at least the digital divider and the arctan-function block (or routine), and depending on which formula is used, optionally furthermore also a square-root-function block (or routine) and/or a square function block (or routine), using the techniques described above. The formulas mentioned in FIG. 10 are based on eqs [2a],[2b] but the present invention is not limited thereto, and a consistency check based on the other equations mentioned above, is also possible for the sensor device of FIG. 10. It is noted that the gradient signals, and thus also the angle values derived therefrom, are highly insensitive to an external disturbance field, if present.

In preferred embodiments, the signals h1 and h3 are subtracted in the analog domain, and then amplified and digitized, and the result diff1 is stored in a first data register, and likewise the signals h2 and h4 are preferably subtracted in the analog domain, and then amplified and digitized, and the result diff2 is stored in a second data register. Thus, only two data registers are required.

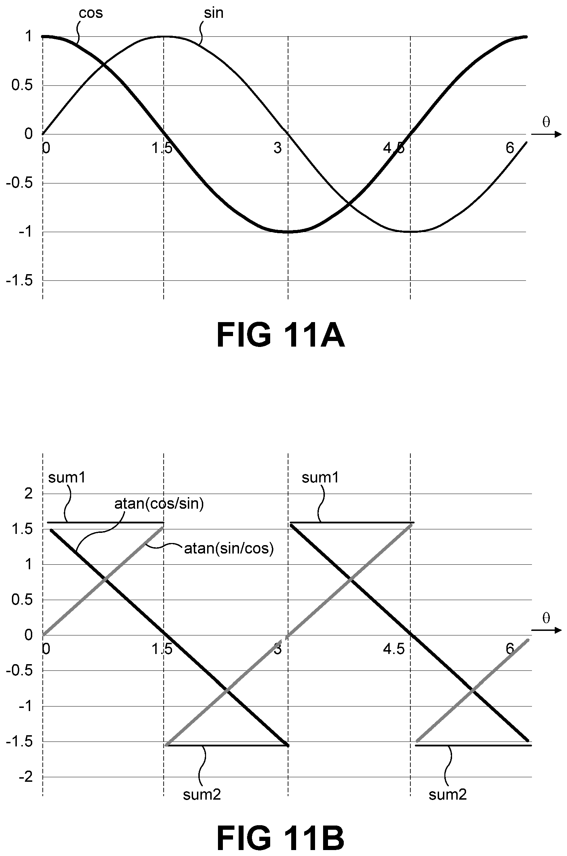

**FIG. 11A** shows an illustrative example of a sine and a cosine waveform as a function of angular displacement, as may be measured by the sensors of the sensor device of FIG. 9 or FIG. 10.

**FIG. 11B** shows that the sum of the two angles $\alpha$=arctangent(By/Bx) and $\beta$=arctangent(Bx/By) is substantially equal to a first constant ($+\pi/2$) or a second constant ($-\pi/2$), assuming that the arctangent function returns a value in the range from $-\pi/2$ to $+\pi/2$.

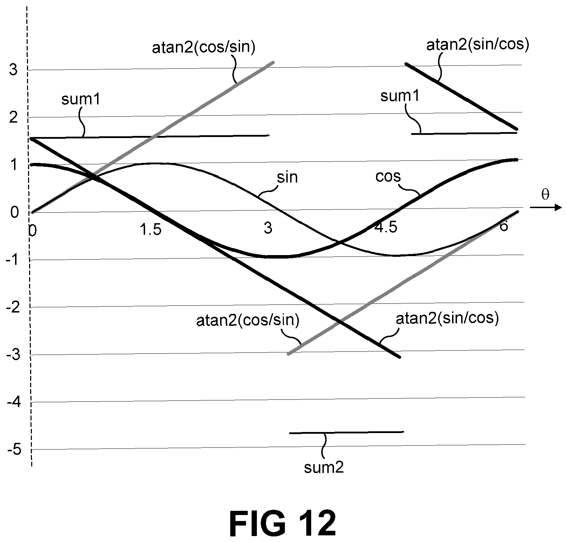

**FIG. 12** shows a variant of FIG. 11B, in case the angle calculator returns a value in the range from $-\pi$ to $+\pi$. Many of the same principles described above are also applicable here, except that the value of the predefined constants to be compared with the sum of $\alpha$ and $\beta$, are other values than those mentioned above. It is also noted that the region where sum1 is applicable is larger than the region where sum2 is applicable.

**FIG. 13A** shows an example of another magnetic position sensor system 1310, which can be seen as a variant of the system of FIG. 9, and as a variant of the system of FIG. 10, and which does not fall under the scope of the present invention. The system 1310 comprises a permanent magnet 1311 and a sensor device 1300. The sensor device comprises a semiconductor substrate with a first group of magnetic sensor elements H4 to H7 located on a virtual circle spaced apart by multiples of 90° configured for measuring Bz at the respective sensor locations, and a second group of magnetic sensor elements V1, V2 located substantially at the centre of the virtual circle, configured for measuring Bx, By. The sensor elements H4 to H7 provide sensor signals h4 to h7, respectively, and the sensor elements V1 and V2 provide sensor signals v1 and v2 respectively.

As explained in FIG. 9, the angular position θ of the magnet 1311 relative to the sensor device 1300 can be derived from the signals v1, v2 obtained from the sensor elements located at the centre, and integrity of the "angle calculator" of the sensor device 1300 can be verified based on these signals (alone). As explained in FIG. 10, the angular position θ of the magnet 1311 relative to the sensor device 1300 can also be derived from the signals h4 to h7 obtained from the sensor elements H4 to H7 located on the virtual circle, and integrity of the angle calculator of the sensor device 1300 can also be tested based on these signals (alone). But since the sensor elements of the first sensor group and the second sensor group define a predefined angular displacement ψ, there is a mathematical relationship between the angles $\alpha$ and $\beta$ and ψ . By taking furthermore into account that the integrity check can be based on several formulas (see equation [1] to [7] mentioned above), it will be appreciated that the diagnostic test can also be performed by comparing a first angle $\alpha$ derived from the signals obtained from the first group of sensors, and a second angle $\beta$ derived from the signals obtained from the second group of sensors, or vice versa, and taking into account the angular offset or shift ψ between the first group of sensors and the second group of sensors, which in the example of FIG. 13A amounts to 30°, but of course the present invention is not limited thereto, and other angular offset or shifts can also be used, e.g. 20° or 40° or 45°, etc. It is a major advantage of such embodiments that not only the arctan function block and the divider block can be tested, but also the magnetic sensors.

A few examples are given below:

In an embodiment, the first angle $\alpha$ is calculated as atan2(dBz/du,dBz/dv), and the second angle $\beta$ is calculated as atan2(Bx,By), and in the diagnostic test it is tested whether $\alpha$ and $\beta$ are phase shifted over the angular offset ψ (e.g. 30°) between the first group and the second group of sensors, taking into account a tolerance margin e.g. for rounding errors, for an influence from an external disturbance field, or a latency between the two measurements, etc.

In another embodiment, the first angle $\alpha$ is calculated as atan2(dBz/du,dBz/dv), and the second angle $\beta$ is calculated as atan2(By,Bx), and in the diagnostic test it is tested whether the sum of $\alpha$ and $\beta$ is substantially equal to a first predefined value of (-90°+30°)= -60° or to a second predefined value of (+90°+30°)=120°.

In another embodiment, the first angle $\alpha$ is calculated as atan2(dBz/du,dBz/dv), and the second angle $\beta$ is calculated as 2*arctan[(sqrt(x*x+1)-1)/x], wherein x is set to Bx/By, and wherein the diagnostic test comprises verifying whether $\alpha$ is substantially equal to ($\beta$+30°) within a predefined tolerance margin of e.g. ±10°.

In an embodiment, the first angle $\alpha$ is calculated as atan2(dBz/dv,dBz/du), and the second angle $\beta$ is calculated as atan2(By,Bx), and in the diagnostic test it is verified whether $\alpha$ and $\beta$ are substantially phase shifted over the angular offset between the first and second sensor group (e.g. 30°).

In an embodiment, the first angle $\alpha$ is calculated as arctan[(sqrt(x*x+1)-1)/x], wherein x is set to (h4-h6)/(h5-h7), and the second angle $\beta$ is calculated as atan2(v1,v2), and in the diagnostic test it is verified whether (2*$\alpha$) and $\beta$ are substantially phase shifted over the angular offset between the first and second sensor group (e.g. 30°).

Similar as described in FIG. 10, in preferred embodiments, the signals h4 and h6 obtained from H4 and H6 are subtracted in the analog domain, and this difference signal is amplified and digitized. In this way the signals from H4 and H6 are highly consistent (captured at the same moments in time). Likewise, the signals h5 and h7 obtained from H5 and H7 are subtracted in the analog domain, and this difference signal is amplified and digitized. By doing so, an external disturbance field, even an external disturbance field that changes quickly over time, is strongly reduced or even completely eliminated. This is true, even if the signals diff1 and diff2 are not captured at the same time, but one after the other.

In a variant of FIG. 13A, the second group of sensors comprises four vertical Hall elements V1 to V4 arranged on the sides of a virtual square, as illustrated in **FIG. 13B**. This virtual square would be located at the centre of the circle of FIG. 13A. A first signal s1 can be derived from the sensor signals as (v1+v3), which is proportional to Bx. A second signal s2 can be derived from the sensor signals as (v2+v4), which is proportional to By. The signals s1 and s2 have substantially the same amplitude and are substantially 90° phase shifted, i.e. they are quadrature signals.

FIG. 14 shows another variant of the sensor system of FIG. 13A, wherein each of the horizontal Hall elements H4 to H7 of the first group of sensors is replaced by a pair of two horizontal Hall elements (e.g. H4 of FIG. 13A is replaced by HP4a and HP4b in FIG. 14) the signals of which are combined to improve the signal-to-noise ratio (SNR); and wherein the vertical Hall elements of the second group of sensors located at the centre of the circle are replaced by an integrated magnetic concentrator (IMC) and four horizontal Hall elements (not shown), or four pairs of horizontal Hall elements HP0a to HP3b (as shown), arranged near the periphery of the IMC, the pairs being angularly spaced by multiples of 90°. In the example shown in FIG. 14, the first and second group of sensors are angularly shifted by an offset $\psi$ =45°, but as mentioned for FIG. 13A, that is not absolutely required, and other angular offsets can also be used, for example any angular offset in the range from 5° to 85°, or in the range from from 10° to 80°, e.g. equal to about 10° or 15° or 20°. Everything else described above for the system of FIG. 13A is also applicable here, mutatis mutandis.

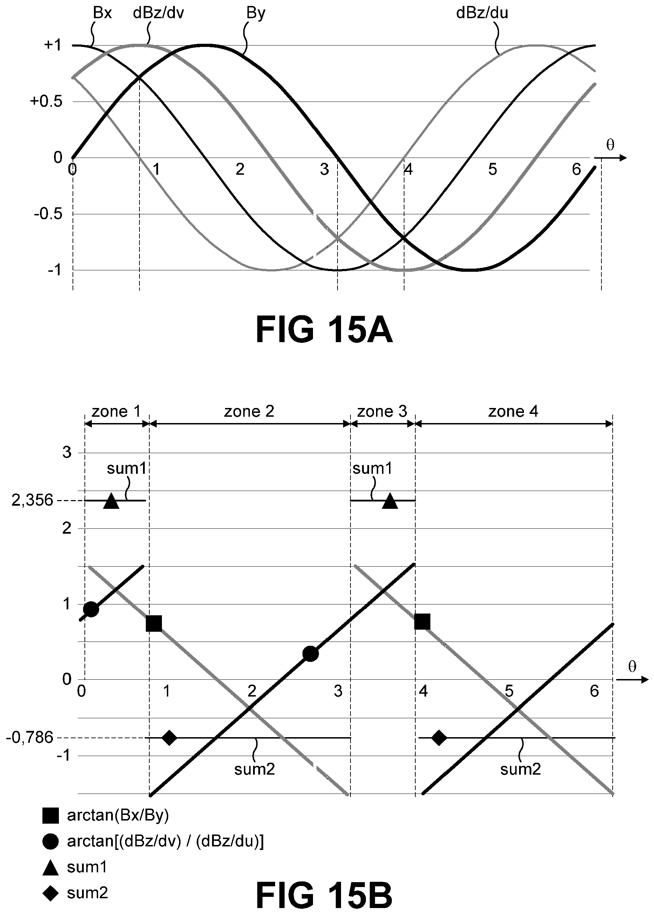

FIG. 15A shows an example of waveforms as may be obtained from the sensor elements of FIG. 13A or FIG. 14, or derived therefrom.

FIG. 15B shows that the sum of arctangent(Bx/By) and arctangent[(dBz/dv),(dBz/vu)] is substantially equal to a first predefined constant (sum1) or a second predefined constant (sum2).

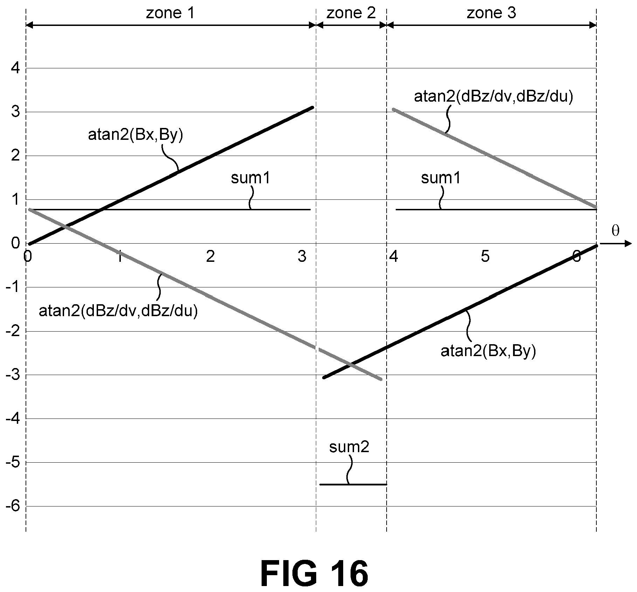

FIG. 16 shows a variant of FIG. 15B, in case the arctangent function returns a value in the range from $-\pi$ to $+\pi$.

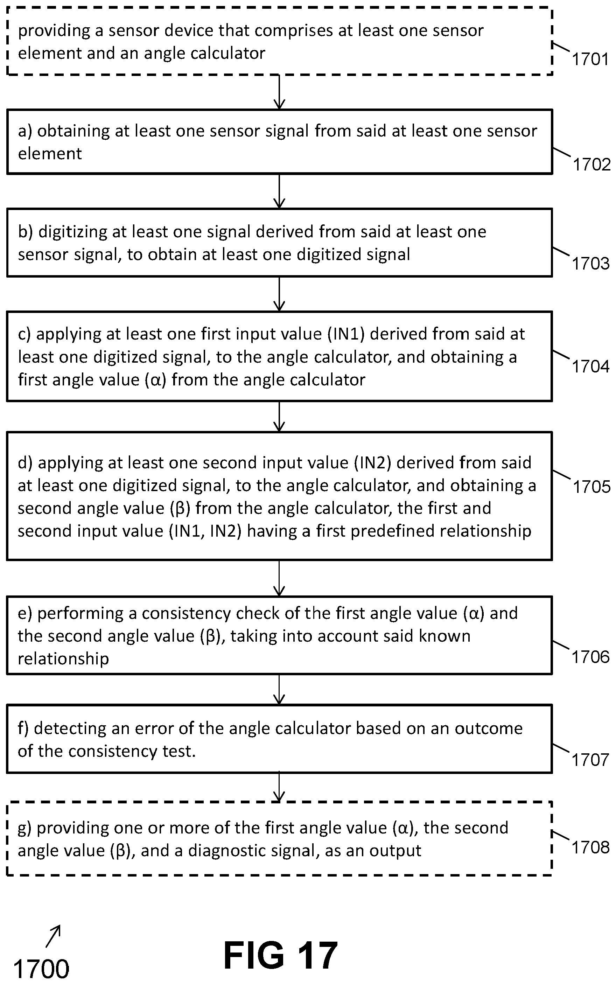

FIG. 17 shows a flow-chart of a method 1700 of testing a sensor device that comprises at least one sensor element and an angle calculator (e.g. in the form of a block or circuit or routine that performs an arctan function or an atan2 function). The method 1700 comprises the following steps:

a) obtaining 1702 at least one sensor signal from said at least one sensor element;

b) digitizing 1703 said at least one sensor signal or digitizing at least one signal derived from said at least one sensor signal, to obtain at least one digitized signal;

c) applying 1704 at least one first input value (IN1) derived from said at least one digitized signal, to the angle calculator, and obtaining a first angle value ($\alpha$) from the angle calculator;

d) applying 1705 at least one second input value (IN2) derived from said at least one digitized signal, to the angle calculator, and obtaining a second angle value ($\beta$) from the angle calculator, the first and second input value (IN1, IN2) having a first predefined relationship;

e) performing 1706 a consistency check of the first angle value ($\alpha$) and the second angle value ($\beta$), taking into account said first predefined relationship, e.g. based on a second predefined relationship corresponding to the first predefined relationship;

f) detecting an error of the angle calculator based on an outcome of the consistency test.

In preferred embodiments, some or all of these steps are performed periodically. The steps a) to c) are preferably performed in each period. The steps d) to f) do not need to be performed in each period, although they may. The decision on whether or not to perform the steps d) to f) may be predefined (e.g. once in every 10 periods, or once in every 100 periods), and/or may depend on the value of the digitized signal.

The method may further comprise a step 1701 of providing a sensor device that comprises at least one sensor element and an angle calculator.

The method may further comprise a step g) of providing 1708 one or more of the first angle value ($\alpha$), the second angle value ($\beta$), and a diagnostic signal, as an output.

In an embodiment, all of the steps are performed by the sensor device itself.

In another embodiment, some of the steps are performed by the sensor device, e.g. steps a) to d), while other steps, e.g. step e) and f) are performed by another processing device, e.g. an electronic control unit (ECU) communicatively connected to the sensor device. In this case, both angle values need to be output in step g).

Step d) and step e) may be based on one or more of the mathematical equations listed above, in particular when discussing FIG. 4.

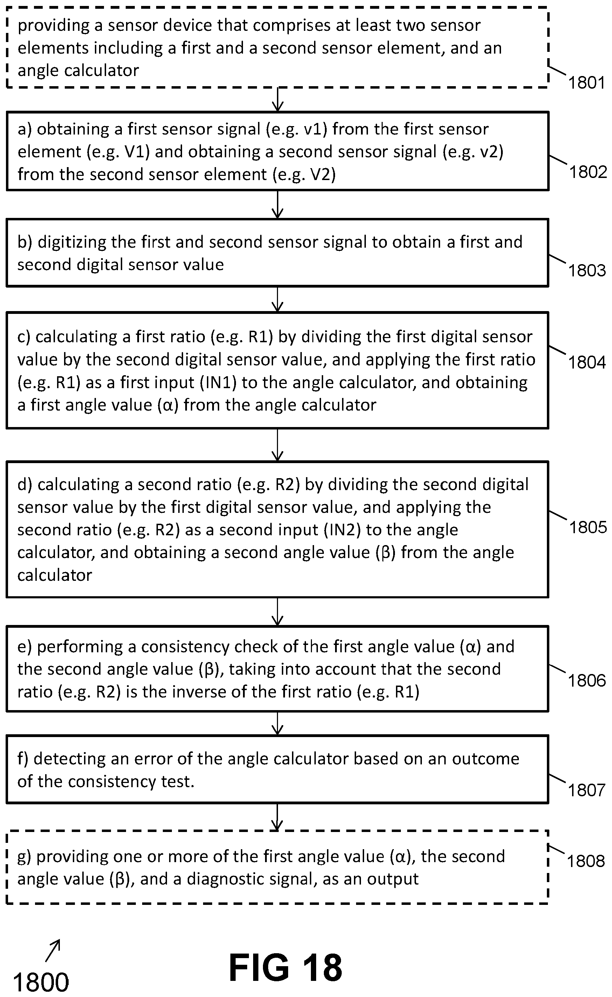

FIG. 18 shows a flow-chart of a method 1800 of testing a sensor device that comprises at least two sensor element (e.g. V1, V2) and an angle calculator (e.g. in the form of a block or circuit or routine that performs an arctan function or an atan2 function). This method can be regarded as a special case of the method 1700 of FIG. 17. Preferably the sensor signals are chosen such that their amplitudes are substantially the same (within $\pm 5\%$), and their phase is approximately 90° phase shifted (within $\pm 5°$), i.e. that the signals are substantially quadrature signals. The method 1800 comprises the following steps:

a) obtaining 1802 a first sensor signal (e.g. v1) from the first sensor element (e.g. V1) and obtaining a second sensor signal (e.g. v2) from the second sensor element (e.g. V2);

b) digitizing 1803 the first and the second sensor signal to obtain a first and a second digital sensor value;

c) calculating 1804 a first ratio (e.g. R1) by dividing the first digital sensor value by the second digital sensor value, and applying the first ratio (e.g. R1) as a first input (IN1) to the angle calculator, and obtaining a first angle value ($\alpha$) from the angle calculator;

d) calculating 1805 a second ratio (e.g. R2) by dividing the second digital sensor value by the first digital sensor value, and applying the second ratio (e.g. R2) as a second input (IN2) to the angle calculator, and obtaining a second angle value ($\beta$) from the angle calculator;

e) performing 1806 a consistency check of the first angle value ($\alpha$) and the second angle value ($\beta$), taking into account that the second ratio (e.g. R2) is the inverse of the first ratio (e.g. R1);

f) detecting 1807 an error of the angle calculator based on an outcome of the consistency test.

The method may further comprise a step 1801 of providing a sensor device that comprises at least two sensor elements and an angle calculator.

The method may further comprise a step g) of providing 1808 one or more of the first angle value ($\alpha$), the second angle value ($\beta$), and a diagnostic signal, as an output.

As mentioned above (FIG. 17),

- some or all of these steps are performed periodically;
- it is not required that the steps d) to f) are performed in each period;
- in an embodiment, all of the steps are performed by the sensor device itself.
- in another embodiment, some of the steps are performed by the sensor device, e.g. steps a) to d), while other steps, e.g. step e) and f) are performed by another processing device.
- Step d) and step e) may be based on one or more of the mathematical equations listed above, in particular when discussing FIG. 4.

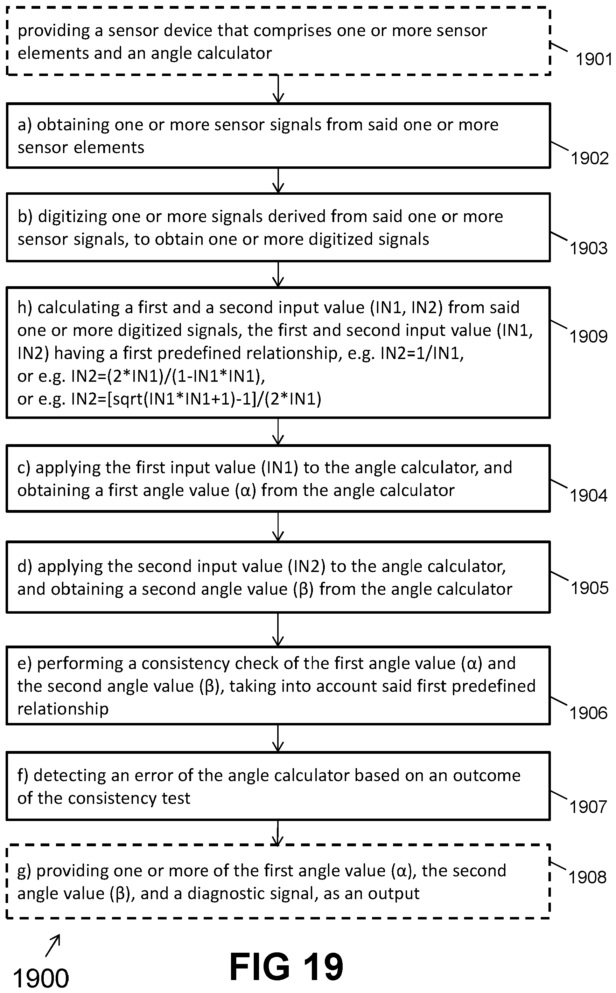

**FIG. 19** shows a flow-chart of a method 1900 of testing a sensor device that comprises at least one sensor element, or at least two sensor elements and an angle calculator (e.g. in the form of a block or circuit or routine that performs an arctan function or an atan2 function). This method can be seen as a variant of FIG. 17. The method 1900 comprises the following steps:

a) obtaining 1902 one or more sensor signals from said one or more sensor elements;

b) digitizing 1903 one or more signals derived from said one or more sensor signals, to obtain one or more digitized signals;

h) calculating 1909 a first and a second input value (IN1, IN2) from said one or more digitized signals, the first and second input value (IN1, IN2) having a first predefined mathematical relationship,

e.g. IN2=(1/IN1), or
e.g. IN2=(2*IN1)/(1-IN1*IN1), or
e.g. IN2=[sqrt(IN1*IN1+1)-1]/(2*IN1);

c) applying the first input value (IN1) to the angle calculator, and obtaining a first angle value ($\alpha$) from the angle calculator;

d) applying 1905 the second input value (IN2) to the angle calculator, and obtaining a second angle value ($\beta$) from the angle calculator;

e) performing 1906 a consistency check of the first angle value ($\alpha$) and the second angle value ($\beta$), taking into account said first predefined relationship;

f) detecting 1907 an error of the angle calculator based on an outcome of the consistency test.

In practical implementations, step h) may comprise: calculating the first input value IN1, and checking if certain conditions are met (e.g. test if IN1<>0) before calculating IN2, but these are implementation details, which need not be spelled out in detail.

In preferred embodiments, some or all of these steps are performed periodically. The steps d), e) and f) do not need to be performed in each period, although they may.

The method may further comprise a step 1901 of providing a sensor device that comprises at least one sensor element and an angle calculator, e.g. a single angle calculator.

The method may further comprise a step g) of providing 1908 one or more of the first angle value ($\alpha$), the second angle value ($\beta$), and a diagnostic signal, as an output.

In an embodiment, all of the steps are performed by the sensor device itself.

In another embodiment, some of the steps are performed by the sensor device, e.g. steps a), b), h), c) and d), while other steps, e.g. step e) and f) are performed by another processing device, e.g. an electronic control unit (ECU) communicatively connected to the sensor device. In this case, both angle values need to be output in step g).

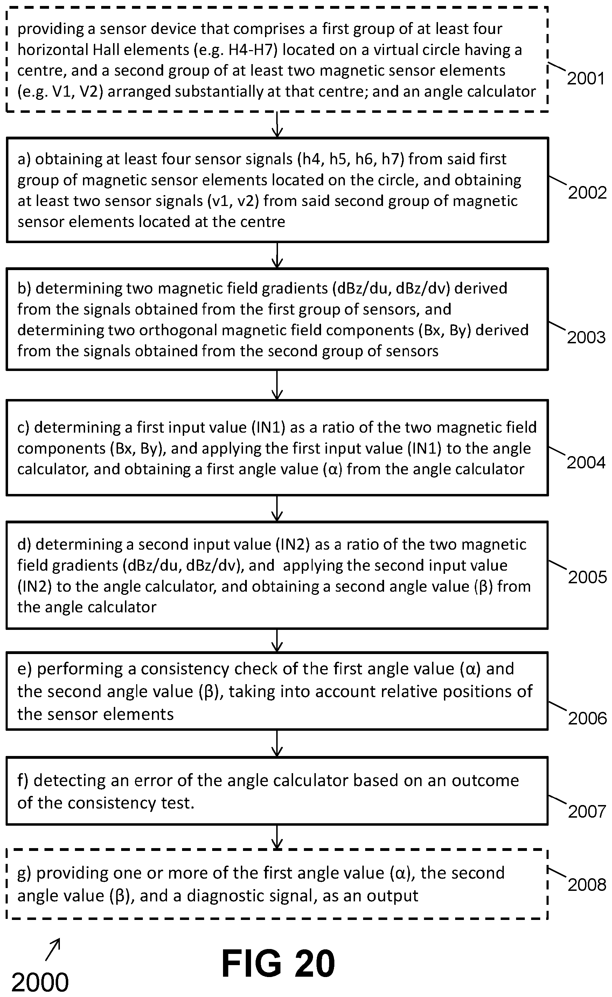

**FIG. 20** shows a flow-chart of a method 2000 of testing a sensor, which does not fall under the scope of the present invention, that comprises a first group of at least four horizontal Hall elements (e.g. H4-H7) located on a virtual circle having a centre, and a second group of at least two magnetic sensor elements (e.g. V1, V2) arranged substantially at that centre, e.g. as illustrated in FIG. 13A or FIG. 14; and that comprises an angle calculator (e.g. in the form of a block or circuit or routine that performs an arctan function or an atan2 function). This method can be seen as a special case of the method shown in FIG. 17 or in FIG. 19. The method 2900 comprises the following steps:

a) obtaining 2002 at least four sensor signals (h4, h5, h6, h7) from said first group of magnetic sensor elements located on the circle, and obtaining at least two sensor signals (v1, v2) from said second group of magnetic sensor elements located at the centre;

b) determining 2003 two magnetic field gradients (dBz/du, dBz/dv) derived from the signals obtained from the first group of sensors, and determining two orthogonal magnetic field components (Bx, By) derived from the signals obtained from the second group of sensors;

c) determining 2004 a first input value (IN1) as a ratio of the two magnetic field components (Bx, By), and applying the first input value (IN1) to the angle calculator, and obtaining a first angle value ($\alpha$) from the angle calculator;

d) determining 2005 a second input value (IN2) as a ratio of the two magnetic field gradients (dBz/du, dBz/dv), and applying the second input value (IN2) to the angle calculator, and obtaining a second angle value ($\beta$) from the angle calculator;

e) performing 2006 a consistency check of the first angle value ($\alpha$) and the second angle value ($\beta$), taking into account relative positions of the sensor elements;

f) detecting 2007 an error of the angle calculator based on an outcome of the consistency test.

The method may further comprise a step 2001 of providing a sensor device that comprises at least one sensor element and an angle calculator.

The method may further comprise a step of providing a sensor device that comprises a first group of at least four horizontal Hall elements (e.g. H4-H7) located on a virtual circle having a centre, and a second group of at least two magnetic sensor elements (e.g. V1, V2) arranged substantially at that centre, and an angle calculator.

The method may comprise a step g) of providing 2008 one or more of the first angle value ($\alpha$), the second angle value ($\beta$), and a diagnostic signal, as an output.

The same or similar remarks as described above for the method 1700 of FIG. 17 and/or for the method 1900 of FIG. 19 are also applicable here, mutatis mutandis.

While the principles of the present invention have been described above mainly for sensor devices having only a single angle calculator block, the same or similar principles can also be applied in sensor devices having two angle calculators, e.g. to detect a "common-cause failing mode". Prior art solutions with two angle calculators typically provide two parallel data-paths: a main path providing a first angle, and a redundant path providing a second angle; and wherein the two paths are followed by a verification block which checks if both angular values are substantially the same, and if they are not, has detected an error. In contrast, using the principles of the present invention described above, one signal path would be fed with a first input IN1, and the other signal path would be fed with a second input IN2, usually different from IN1, except for rare cases; and the verification block would not test whether both angular values are substantially the same, but would test whether the two angles satisfy a second predefined relationship, e.g. as described above. The same equations [1] to [7], or other equations, can be used also in this case. And also in this case, the actual verification may be performed outside of the sensor device, e.g. in an ECU.

While individual features are explained in different drawings and in different embodiments of the present invention, it is contemplated that features of different embodiments can be combined, as would be obvious to the skilled person, when reading this document.

## Claims

1. A method (1900) of testing a sensor device (200; 300; 400; 900; 1000) that comprises one or more magnetic sensor elements and a single angle calculator (204; 304; 403,404), the method comprising the steps of:

a) obtaining (1902) one or more sensor signals from said one or more magnetic sensor elements;

b) digitizing (1903) one or more signals derived from said one or more sensor signals, to obtain one or more digitized signals;

h) calculating (1909) a first input value IN1 from said one or more digitized signals, and calculating a second input value IN2 using a first relationship, said first relationship being a reversible predefined transformation of the first input value;

c) applying (1904) the first input value (IN1) to the single angle calculator, and obtaining a first angle value ($\alpha$) from the single angle calculator;

d) applying (1905) the second input value (IN2) to the single angle calculator, and obtaining a second angle value ($\beta$) from the single angle calculator;

e) performing (1906), by the sensor device itself, a consistency check of the first angle value ($\alpha$) and the second angle value ($\beta$), taking into account said first predefined relationship;

f) detecting (1907), by the sensor device itself, an error of the angle calculator based on an outcome of the consistency test.

2. A method according to claim 1, wherein step h) comprises: calculating the second input value using one of the following formulas:

$$IN2=(1/IN1),$$

or

$$IN2=(2*IN1)/(1-IN1*IN1),$$

or

$$IN2=[sqrt(IN1*IN1+1)-1]/(2*IN1).$$

3. A method according to claim 1 or 2,

wherein step b) further comprises: temporarily storing the digital values in two or more data registers,
and wherein the first digital input value (IN1) and the second digital value (IN2) are derived from the exact same numerical values as those stored in the two or more data registers.

4. A method according to any of claims 1 to 3,

wherein step f) further comprises: outputting at least the first angle ($\alpha$) and a diagnostic signal (E) for indicating whether an error was detected;
or wherein step f) further comprises: outputting at least the first angle ($\alpha$), and the second angle ($\beta$), and a diagnostic signal (E) for indicating whether an error was detected.

5. A method according to any of the claims 1 to 4,

wherein the one or more magnetic sensor elements of the sensor device (900) comprise at least a first and a second vertical Hall element (V1,V2);
wherein step a) comprises: obtaining a first sensor signal (v1) from the first vertical Hall element (V1), and obtaining a second sensor signal (v2) from the second vertical Hall element (V2);
wherein step b) comprises digitizing the first sensor signal (v1) to yield a first digital signal (s1,By), and digitizing the second sensor signal (v2) to yield a second digital signal (s2,Bx);
wherein step h) comprises: calculating the first input value IN1 as a ratio of the first and the second digital value.

6. A method according to any of the claims 1 to 4,

wherein the sensor device (900) further comprises an integrated magnetic concentrator, IMC;
wherein the one or more magnetic sensor elements comprise four horizontal Hall elements (HO,H1,H2,H3) arranged near a periphery of the IMC, angularly spaced by multiples of 90°;
wherein step a) comprises: obtaining four sensor signals h0,h1,h2,h3 from said four horizontal Hall elements;
wherein step b) comprises: determining a first difference by subtracting h0 and h2 in the analog domain, and digitizing the first difference to yield a first digital value (Bx); and determining a second difference by subtracting h1 and h3 in the analog domain, and digitizing the second difference to yield a second digital value (By),
or wherein step b) comprises: digitizing the four sensor signals h0,h1,h2,h3, and determining a first digital signal (Bx) by subtracting the digital values of h0 and h2, and determining a second digital signal (By) by subtracting the digital values of h1 and h3;
wherein step h) comprises: calculating the first input value IN1 as a ratio of the first and the second digital value.

7. A method according to any of the claims 1 to 4,

wherein the one or more magnetic sensor elements of the sensor device (1000) comprise four horizontal Hall elements (H1,H2,H3,H4) arranged on a virtual circle, angularly spaced by multiples of 90°;
wherein step a) comprises: obtaining four sensor signals h1,h2,h3,h4 from said four horizontal Hall elements;
wherein step b) comprises: determining a first difference (diff1) by subtracting h1 and h3 in the analog domain, and digitizing the first difference (diff1) to yield a first digital value; and determining a second difference (diff2) by subtracting h2 and h4 in the analog domain, and digitizing the second difference (diff2) to yield a second digital value,
or wherein step b) comprises: digitizing the four sensor signals h1,h2,h3,h4 and determining a first digital signal by subtracting the digital values of h1 and h3, and determining a second digital signal by subtracting the digital values of h2 and h4;
wherein step h) comprises: calculating the first input value IN1 as a ratio of the first and the second digital value.

8. A sensor device (200; 300; 400; 900; 1000) comprising:

- one or more magnetic sensor elements;
- an interface circuit (202) with an analog-to-digital convertor (ADC) configured for performing steps a) and b) of a method according to any of the previous claims;
- a single angle calculator (204; 304; 404);
- a processing circuit (207; 308; 407) configured for performing the steps h), c), d), e) and f) of a method according to any of the previous claims.

9. A sensor device (200; 300; 400; 900; 1000) according to claim 8,

wherein the sensor device (900; 1000) further comprises two or more data registers,
and configured for performing a method according to claim 3.

10. A sensor device (200; 300; 400; 900) according to claim 8 or 9,

wherein the one or more sensor elements comprise at least a first and a second vertical Hall element (V1,V2);
and wherein the sensor device is configured for performing a method according to claim 5.

11. A sensor device (200; 300; 400; 900) according to claim 8 or 9,

wherein the sensor device (900) further comprises an integrated magnetic concentrator (IMC);
and wherein the one or more sensor elements comprise four horizontal Hall elements (HO,H1,H2,H3) arranged near a periphery of the IMC, angularly spaced by multiples of 90°;
and wherein the sensor device is configured for performing a method according to claim 6.

12. A sensor device (200; 300; 400; 1000) according to claim 8 or 9,

wherein the one or more sensor elements of the sensor device (1010) comprise four horizontal Hall elements (H1,H2,H3,H4) arranged on a virtual circle, angularly spaced by multiples of 90°;
and wherein the sensor device is configured for performing a method according to claim 7.

13. A sensor device (200; 300; 400; 900; 1000) according to any of the claims 8 to 12,
wherein the single angle calculator is implemented in software running on a digital processor, for example by means of a look-up table stored in a non-volatile memory, with or without linear interpolation.

14. A sensor device (300) according to any of the claims 8 to 13,
wherein the processing circuit is implemented in a programmable controller (308).

15. A magnetic position sensor system (910; 1010) comprising:

- a magnetic sensor device (900; 1000) according to any of the claims 8 to 14;
- a permanent magnet (911; 1011) movably mounted relative to the sensor device.

**16.** A magnetic position sensor system according to claim 15,

wherein the magnetic position sensor system further comprises a second processor communicatively connected to the sensor device;
and wherein the sensor device is configured for outputting at least the first angle ($\alpha$) and the second angle ($\beta$) to the second processor;
and wherein the second processor is configured for also performing said consistency check of the first angle value ($\alpha$) and the second angle value ($\beta$).

**Patentansprüche**

**1.** Verfahren (1900) zum Prüfen einer Sensorvorrichtung (200; 300; 400; 900; 1000), die ein oder mehrere Magnetsensorelemente und einen einzelnen Winkelrechner (204; 304; 403, 404) umfasst, wobei das Verfahren die Schritte umfasst zum:

a) Erhalten (1902) eines oder mehrerer Sensorsignale von dem einen oder den mehreren Magnetsensorelementen;
b) Digitalisieren (1903) eines oder mehrerer, aus dem einen oder den mehreren Sensorsignalen abgeleiteter Signale, um ein oder mehrere digitalisierte Signale zu erhalten;
h) Berechnen (1909) eines ersten Eingabewerts IN1 aus dem einen oder den mehreren digitalisierten Signalen, und Berechnen eines zweiten Eingabewerts IN2 unter Verwendung einer ersten Beziehung, wobei die erste Beziehung eine umkehrbare vordefinierte Transformation des ersten Eingabewerts ist;
c) Einspeisen (1904) des ersten Eingabewerts (IN1) in den einzelnen Winkelrechner und Erhalten eines ersten Winkelwerts ($\alpha$) aus dem einzelnen Winkelrechner;
d) Einspeisen (1905) des zweiten Eingabewerts (IN2) in den einzelnen Winkelrechner und Erhalten eines zweiten Winkelwerts ($\beta$) aus dem einzelnen Winkelrechner;
e) Durchführen (1906), durch die Sensorvorrichtung selbst, einer Konsistenzprüfung des ersten Winkelwerts ($\alpha$) und des zweiten Winkelwerts ($\beta$), wobei die erste vordefinierte Beziehung berücksichtigt wird;
f) Erkennen (1907), durch die Sensorvorrichtung selbst, eines Fehlers des Winkelrechners auf Grundlage eines Ergebnisses des Konsistenztests.

**2.** Verfahren nach Anspruch 1, wobei Schritt h) umfasst: Berechnen des zweiten Eingabewerts unter Verwendung einer der folgenden Formeln:

$$IN2 = (1/IN1)$$

oder

$$IN2 = (2*IN1)/(1-IN1*IN1)$$

oder

$$IN2 = [sqrt(IN1*IN1+1)-1]/(2*IN1).$$

**3.** Verfahren nach Anspruch 1 oder 2,

wobei Schritt b) ferner umfasst: temporäres Speichern der digitalen Werte in zwei oder mehr Datenregistern, und wobei der erste digitale Eingabewert (IN1) und der zweite digitale Wert (IN2) aus den exakt gleichen numerischen Werten abgeleitet sind, wie die in den zwei oder mehr Datenregistern gespeicherten.

**4.** Verfahren nach einem der Ansprüche 1 bis 3,

wobei Schritt f) ferner umfasst: Ausgeben zumindest des ersten Winkels ($\alpha$) und eines diagnostischen Signals (E), um anzuzeigen, ob ein Fehler erkannt wurde;

oder wobei Schritt f) ferner umfasst: Ausgeben zumindest des ersten Winkels ($\alpha$) und des zweiten Winkels ($\beta$) und eines diagnostischen Signals (E), um anzuzeigen, ob ein Fehler erkannt wurde.

5. Verfahren nach einem der Ansprüche 1 bis 4,

wobei der eine oder die mehreren Magnetsensorelemente der Sensorvorrichtung (900) zumindest ein erstes und ein zweites vertikales Hall-Element (V1, V2) umfassen;

wobei Schritt a) umfasst: Erhalten eines ersten Sensorsignals (v1) vom ersten vertikalen Hall-Element (V1) und Erhalten eines zweiten Sensorsignals (v2) vom zweiten vertikalen Hall-Element (V2);

wobei Schritt b) umfasst: Digitalisieren des ersten Sensorsignals (v1), was ein erstes Digitalsignal (s1,By) ergibt, und Digitalisieren des zweiten Sensorsignals (v2), was ein zweites Digitalsignal (s2,Bx) ergibt;

wobei Schritt h) umfasst: Berechnen des ersten Eingabewerts IN1 als ein Verhältnis des ersten und des zweiten digitalen Werts.

6. Verfahren nach einem der Ansprüche 1 bis 4,

wobei die Sensorvorrichtung (900) ferner einen integrierten Magnetkonzentrator, IMC, umfasst;

wobei das eine oder die mehreren Magnetsensorelemente vier horizontale Hall-Elemente (HO,H1,H2,H3) umfassen, die nahe einer Peripherie des IMC angeordnet sind, in Winkelabständen von Mehrfachen von 90°;

wobei Schritt a) umfasst: Erhalten von vier Sensorsignalen h0,h1,h2,h3 von den vier horizontalen Hall-Elementen;

wobei Schritt b) umfasst: Ermitteln einer ersten Differenz durch Subtrahieren von h0 und h2 im Analogbereich und Digitalisieren der ersten Differenz, was einen ersten digitalen Wert (Bx) ergibt; und Ermitteln einer zweiten Differenz durch Subtrahieren von h1 und h3 im Analogbereich und Digitalisieren der zweiten Differenz, was einen zweiten digitalen Wert (By) ergibt,

oder wobei Schritt b) umfasst: Digitalisieren der vier Sensorsignale h0,h1,h2,h3 und Ermitteln eines ersten Digitalsignals (Bx) durch Subtrahieren der digitalen Werte von h0 und h2 und Ermitteln eines zweiten Digitalsignals (By) durch Subtrahieren der digitalen Werte von h1 und h3;

wobei Schritt h) umfasst: Berechnen des ersten Eingabewerts IN1 als ein Verhältnis des ersten und des zweiten digitalen Werts.

7. Verfahren nach einem der Ansprüche 1 bis 4,

wobei das eine oder die mehreren Magnetsensorelemente der Sensorvorrichtung (1000) vier horizontale Hall-Elemente (H1,H2,H3,H4) umfassen, die auf einem virtuellen Kreis angeordnet sind, in Winkelabständen von Mehrfachen von 90°;

wobei Schritt a) umfasst: Erhalten von vier Sensorsignalen h1,h2,h3,h4 von den vier horizontalen Hall-Elementen;

wobei Schritt b) umfasst: Ermitteln einer ersten Differenz (diff1) durch Subtrahieren von h1 und h3 im Analogbereich und Digitalisieren der ersten Differenz (diff1), was einen ersten digitalen Wert ergibt; und Ermitteln einer zweiten Differenz (diff2) durch Subtrahieren von h2 und h4 im Analogbereich und Digitalisieren der zweiten Differenz (diff2), was einen zweiten digitalen Wert ergibt,

oder wobei Schritt b) umfasst: Digitalisieren der vier Sensorsignale h1,h2,h3,h4 und Ermitteln eines ersten Digitalsignals durch Subtrahieren der digitalen Werte von h1 und h3 und Ermitteln eines zweiten Digitalsignals durch Subtrahieren der digitalen Werte von h2 und h4;

wobei Schritt h) umfasst: Berechnen des ersten Eingabewerts IN1 als ein Verhältnis des ersten und des zweiten digitalen Werts.

8. Sensorvorrichtung (200; 300; 400; 900; 1000), umfassend:

- ein oder mehrere Magnetsensorelemente;
- eine Schnittstellenschaltung (202) mit einem Analog-digital-Wandler (ADC), der zum Durchführen der Schritte a) und b) eines Verfahrens nach einem der vorhergehenden Ansprüche ausgelegt ist;
- einen einzelnen Winkelrechner (204; 304; 404);
- eine Verarbeitungsschaltung (207; 308; 407), die zum Durchführen der Schritte h), c), d), e) und f) eines Verfahrens nach einem der vorhergehenden Ansprüche ausgelegt ist.

**9.** Sensorvorrichtung (200; 300; 400; 900; 1000) nach Anspruch 8,

wobei die Sensorvorrichtung (900; 1000) ferner zwei oder mehr Datenregister umfasst
und zum Durchführen eines Verfahrens nach Anspruch 3 ausgelegt ist.

**10.** Sensorvorrichtung (200; 300; 400; 900) nach Anspruch 8 oder 9,

wobei der eine oder die mehreren Sensorelemente zumindest ein erstes und ein zweites vertikales Hall-Element (V1, V2) umfassen;
und wobei die Sensorvorrichtung zum Durchführen eines Verfahrens nach Anspruch 5 ausgelegt ist.

**11.** Sensorvorrichtung (200; 300; 400; 900) nach Anspruch 8 oder 9,

wobei die Sensorvorrichtung (900) ferner einen integrierten Magnetkonzentrator (IMC) umfasst;
und wobei das eine oder die mehreren Sensorelemente vier horizontale Hall-Elemente (HO,H1,H2,H3) umfassen, die nahe einer Peripherie des IMC angeordnet sind, in Winkelabständen von Mehrfachen von 90°;
und wobei die Sensorvorrichtung zum Durchführen eines Verfahrens nach Anspruch 6 ausgelegt ist.

**12.** Sensorvorrichtung (200; 300; 400; 1000) nach Anspruch 8 oder 9,

wobei das eine oder die mehreren Sensorelemente der Sensorvorrichtung (1010) vier horizontale Hall-Elemente (H1,H2,H3,H4) umfassen, die auf einem virtuellen Kreis angeordnet sind, in Winkelabständen von Mehrfachen von 90°;
und wobei die Sensorvorrichtung zum Durchführen eines Verfahrens nach Anspruch 7 ausgelegt ist.

**13.** Sensorvorrichtung (200; 300; 400; 900; 1000) nach einem der Ansprüche 8 bis 12,
wobei der einzelne Winkelrechner in Software umgesetzt ist, die auf einem Digitalprozessor läuft, zum Beispiel mithilfe einer Nachschlagetabelle, die in einem nichtflüchtigen Speicher gespeichert ist, mit oder ohne lineare Interpolation.

**14.** Sensorvorrichtung (300) nach einem der Ansprüche 8 bis 13,
wobei die Verarbeitungsschaltung in einer programmierbaren Steuerung (308) umgesetzt ist.

**15.** Magnetpositionssensorsystem (910; 1010), umfassend:

- eine Magnetsensorvorrichtung (900; 1000) nach einem der Ansprüche 8 bis 14;
- einen Permanentmagneten (911; 1011), der relativ zur Sensorvorrichtung beweglich montiert ist.

**16.** Magnetpositionssensorsystem nach Anspruch 15,

wobei das Magnetpositionssensorsystem ferner einen zweiten Prozessor umfasst, der kommunikativ mit der Sensorvorrichtung verbunden ist;
und wobei die Sensorvorrichtung zum Ausgeben von zumindest dem ersten Winkel ($\alpha$) und dem zweiten Winkel ($\beta$) an den zweiten Prozessor ausgelegt ist;
und wobei der zweite Prozessor ebenfalls zum Durchführen der Konsistenzprüfung des ersten Winkelwerts ($\alpha$) und des zweiten Winkelwerts ($\beta$) ausgelegt ist.

**Revendications**

**1.** Procédé (1900) de tester un dispositif de capteur (200; 300; 400; 900; 1000) qui comprend un ou plusieurs éléments de capteur magnétique et un seul calculateur d'angle (204; 304; 403,404), le procédé comprenant les étapes suivantes:

a) obtenir (1902) un ou plusieurs signaux de capteur à partir dudit ou desdits éléments capteurs magnétiques;
b) numériser (1903) un ou plusieurs signaux dérivés dudit ou desdits signaux de capteur, pour obtenir un ou plusieurs signaux numérisés;
h) calculer (1909) une première valeur d'entrée IN1 à partir dudit ou desdits signaux numérisés, et calculer une deuxième valeur d'entrée IN2 en utilisant une première relation, ladite première relation étant une transformation prédéfinie réversible de la première valeur d'entrée;

c) appliquer (1904) la première valeur d'entrée (IN1) au seul calculateur d'angle, et obtenir une première valeur d'angle ($\alpha$) à partir du seul calculateur d'angle;

d) appliquer (1905) la deuxième valeur d'entrée (IN2) au seul calculateur d'angle, et obtenir une deuxième valeur d'angle ($\beta$) à partir du seul calculateur d'angle;

e) effectuer (1906), par le dispositif de capteur lui-même, un contrôle de cohérence entre la première valeur d'angle ($\alpha$) et la deuxième valeur d'angle ($\beta$), en tenant compte de ladite première relation prédéfinie;

f) détecter (1907), par le dispositif de capteur lui-même, une erreur du calculateur d'angle sur la base d'un résultat du test de cohérence.

2. Procédé selon la revendication 1, dans lequel l'étape h) comprend: calculer la deuxième valeur d'entrée en utilisant l'une des formules suivantes:

$$IN2=(1/IN1),$$

ou

$$IN2=(2*IN1)/(1-IN1*IN1),$$

ou

$$IN2=[sqrt(IN1*IN1+1)-1]/(2*IN1).$$

3. Procédé selon la revendication 1 ou 2,

dans lequel l'étape b) comprend en outre: stocker temporairement les valeurs numériques dans deux ou plusieurs registres de données,

et dans lequel la première valeur d'entrée numérique (IN1) et la deuxième valeur numérique (IN2) sont dérivées des mêmes valeurs numériques que celles stockées dans les deux ou plusieurs registres de données.

4. Procédé selon l'une quelconque des revendications 1 à 3,

dans lequel l'étape f) comprend en outre: fournir au moins le premier angle ($\alpha$) et un signal de diagnostic (E) indiquant si une erreur a été détectée;

ou dans lequel l'étape f) comprend en outre: fournir au moins le premier angle ($\alpha$), et un deuxième angle ($\beta$), et un signal de diagnostic (E) indiquant si une erreur a été détectée.

5. Procédé selon l'une quelconque des revendications 1 à 4,

dans lequel le ou les éléments capteurs magnétiques du dispositif de capteur (900) comprennent au moins un premier et un deuxième éléments Hall verticaux (V1,V2);

dans lequel l'étape a) comprend: obtenir un premier signal de capteur (v1) à partir du premier élément Hall vertical (V1), et obtenir un deuxième signal de capteur (v2) à partir du deuxième élément Hall vertical (V2);

dans lequel l'étape b) comprend: numériser le premier signal de capteur (v1) pour obtenir une première valeur numérique (s1,By), et numériser le deuxième signal de capteur (v2) pour obtenir une deuxième valeur numérique (s2,Bx),

dans lequel l'étape h) comprend: calculer la première valeur d'entrée IN1 comme un rapport de la première et la deuxième valeur numérique.

6. Procédé selon l'une quelconque des revendications 1 à 4,

dans lequel le dispositif de capteur (900) comprend en outre un concentrateur magnétique intégré, IMC;

dans lequel le ou les éléments de capteur magnétique comprennent quatre éléments Hall horizontaux (H0, H1, H2, H3) situés près d'une périphérie de l'IMC et espacés angulairement de multiples de 90°;

dans lequel l'étape a) comprend: obtenir quatre signaux de capteur h0,h1,h2,h3 à partir des quatre éléments Hall horizontaux;

dans lequel l'étape b) comprend: déterminer une première différence en soustrayant h0 et h2 dans le domaine analogique, et numériser la première différence pour obtenir une première valeur numérique (Bx); et déterminer une deuxième différence en soustrayant h1 et h3 dans le domaine analogique, et numériser la deuxième différence pour obtenir une deuxième valeur numérique (By),

ou dans lequel l'étape b) comprend: numériser les quatre signaux de capteur h0,h1,h2,h3, et déterminer un premier signal numérique (Bx) en soustrayant les valeurs numériques de h0 et h2, et déterminer un deuxième signal numérique (By) en soustrayant les valeurs numériques de h1 et h3;

dans lequel l'étape h) comprend: calculer la première valeur d'entrée IN1 comme un rapport de la première et la deuxième valeur numérique.

7. Procédé selon l'une quelconque des revendications 1 à 4,

dans lequel le ou les éléments capteurs magnétiques du dispositif de capteur (1000) comprennent quatre éléments Hall horizontaux (H1, H2, H3, H4) situés sur un cercle virtuel, espacés angulairement de multiples de 90°;

dans lequel l'étape a) comprend: obtenir quatre signaux de capteur h1,h2,h3,h4 à partir des quatre éléments Hall horizontaux;

dans lequel l'étape b) comprend: déterminer une première différence (diff1) en soustrayant h1 et h3 dans le domaine analogique, et numériser la première différence (diff1) pour obtenir une première valeur numérique; et déterminer une deuxième différence (diff2) en soustrayant h2 et h4 dans le domaine analogique, et numériser la deuxième différence (diff2) pour obtenir une deuxième valeur numérique,

ou dans lequel l'étape b) comprend: numériser les quatre signaux de capteur h1,h2,h3,h4, et déterminer un premier signal numérique en soustrayant les valeurs numériques de h1 et h3, et déterminer un deuxième signal numérique en soustrayant les valeurs numériques de h2 et h4;

dans lequel l'étape h) comprend: calculer la première valeur d'entrée IN1 comme un rapport de la première et la deuxième valeur numérique.

8. Dispositif de capteur (200; 300; 400; 900; 1000) comprenant:

- un ou plusieurs éléments capteurs magnétiques;
- un circuit d'interface (202) avec un convertisseur analogique-numérique (ADC) configuré pour exécuter les étapes a) et b) d'un procédé selon l'une quelconque des revendications précédentes;
- un seul calculateur d'angle (204; 304; 404);
- un circuit de traitement (207; 308; 407) configuré pour exécuter les étapes h), c), d), e) et f) d'un procédé selon l'une quelconque des revendications précédentes.

9. Dispositif de capteur (200; 300; 400; 900; 1000) selon la revendication 8,

dans lequel le dispositif de capteur (900; 1000) comprend en outre deux ou plusieurs registres de données, et configuré pour exécuter un procédé selon la revendication 3.

10. Dispositif de capteur (200; 300; 400; 900) selon la revendication 8 ou 9,

dans lequel le ou les éléments capteurs comprennent au moins un premier et un deuxième éléments Hall verticaux (V1,V2);

et dans lequel le dispositif de capteur est configuré pour exécuter un procédé selon la revendication 5.

11. Dispositif de capteur (200; 300; 400; 900) selon la revendication 8 ou 9,

dans lequel le dispositif de capteur (900) comprend en outre un concentrateur magnétique intégré (IMC);

et dans lequel le ou les éléments capteurs comprennent quatre éléments Hall horizontaux (H0, H1, H2, H3) situés près d'une périphérie de l'IMC, et espacés angulairement de multiples de 90°;

et dans lequel le dispositif de capteur est configuré pour exécuter un procédé selon la revendication 6.

12. Dispositif de capteur (200; 300; 400; 1000) selon la revendication 8 ou 9,

dans lequel le ou les éléments capteurs du dispositif de capteur (1010) comprennent quatre éléments Hall horizontaux (H1, H2, H3, H4) situés sur un cercle virtuel, espacés angulairement de multiples de 90°;
et dans lequel le dispositif de capteur est configuré pour exécuter un procédé selon la revendication 7.

13. Dispositif de capteur (200; 300; 400; 900; 1000) selon l'une quelconque des revendications 8 à 12, dans lequel le seul calculateur d'angle est implémenté dans un logiciel fonctionnant sur un processeur numérique, par exemple en utilisant une table de consultation stockée dans une mémoire non volatile, avec ou sans interpolation linéaire.

14. Dispositif de capteur (300) selon l'une quelconque des revendications 8 à 13, dans lequel le circuit de traitement est réalisé dans un dispositif de commande programmable (308).

15. Système de capteur de position magnétique (910; 1010) comprenant:

- un dispositif de capteur magnétique (900; 1000) selon l'une quelconque des revendications 8 à 14;
- un aimant permanent (911; 1011) monté de manière mobile par rapport au dispositif de capteur.

16. Système de capteur de position magnétique selon la revendication 15,

dans lequel le système de capteur de position magnétique comprend en outre un deuxième processeur connecté de manière communicative au dispositif de capteur;
et dans lequel le dispositif de capteur est configuré pour fournir au moins le premier angle ($\alpha$) et le deuxième angle ($\beta$) au deuxième processeur;
et dans lequel le deuxième processeur est configuré pour effectuer également ledit contrôle de cohérence de la première valeur d'angle ($\alpha$) et de la deuxième valeur d'angle ($\beta$).

ANGLE CALCULATOR

two magnetic sensors

Interface Circuit (+ADC)

102

s1,s2

digital division

103

R

digital arctan function

104

α

R=s1/s2

arctan(R)

atan2(s1,s2)

100

FIG 1

Interface
Circuit
+ADC

202

e.g.
s1
s1,s2

Argument
Generation
Circuit
(e.g. with a
divider)

207

t1: IN1
t2: IN2

digital
arctan
function

204

IN1 => α
IN2 => β

one
or more
sensor(s)

mode

verification
circuit

205

α,E

mode

control circuit    206

200    **FIG 2**

one
or more
sensor(s)

t1: IN1
t2: IN2

digital
arctan

304

IN1 => α
IN2 => β

Interface
Circuit
+ADC

302

e.g.
s1
s1,s2

Control and
Processing circuit,
e.g. programmable CPU

308

α

E

300    **FIG 3**

FIG 4

400

$\Delta T$

t0   t1          t2          t3          t4      t5   time

sense
signal1

sense
signal2

$\alpha=arctan(IN1)$

$\beta=arctan(IN2)$

consistency
check $\alpha$, $\beta$

output $\alpha$
or $\alpha,\beta$
or $\alpha,E$

# FIG 5

$\Delta T$

time

sense
signal1

sense
signal2

$\alpha=arctan(s1/s2)$

$\beta=arctan(s2/s1)$

consistency
check $\alpha$, $\beta$

output $\alpha$
or $\alpha,\beta$
or $\alpha,E$

# FIG 6

**FIG 7**

**FIG 8**

Bx=(h0-h2)        Bx=v2
By=(h1-h3)        By=v1

With eq[2]:
IN1=By/Bx; α=arctan(IN1) or α = atan2(By,Bx)
IN2=Bx/By; β=arctan(IN2) or β = atan2(Bx,By)

Example Consistency Check:
if sign(Bx)=sign(By)   then test if (α+β) ≈ +90°
if sign(Bx)<>sign(By) then test if (α+β) ≈ -90°

# FIG 9

1011

1000

1010

Group1:
Bz1=h1
Bz2=h2
Bz3=h3
Bz4=h4
diff1=(h1-h3)=dBz/dx
diff2=(h2-h4)=dBz/dy
α=atan2(diff1,diff2)
β=atan2(diff2,diff1)

**FIG 10**

**FIG 11A**

**FIG 11B**

**FIG 12**

Group2:
Bx=(v1+v3)
By=(v2+v4)

**FIG 13B**

Group1:
Bz4=h4
Bz5=h5
Bz6=h6
Bz7=h7
diff1=(h4-h6)=dBz/du
diff2=(h5-h7)=dBz/dv
α=atan2(dBz/du,dBz/dv)

Group2:
Bx=v1
By=v2
β=atan2(Bx,By)

ψ, e.g. 30°

**FIG 13A**

Group1:
h4=(h4b+h4a)
h5=(h5b+h5a)
h6=(h6b+h6a)
h7=(h7b+h7a)
Bz4=h4
Bz5=h5
Bz6=h6
Bz7=h7
dBz/du=(h4-h6)
dBz/dv=(h5-h7)
β1=atan2(dBz/du,dBz/dv)
β2=atan2(dBz/dv,dBz/du)

Group2:
h0=(h0b+h0a)
h1=(h1b+h1a)
h2=(h2b+h2a)
h3=(h3b+h3a)
Bx=(h0-h2)
By=(h1-h3)
α=atan2(Bx,By)

**FIG 14**

**FIG 15A**

■ arctan(Bx/By)

● arctan[(dBz/dv) / (dBz/du)]

▲ sum1

◆ sum2

**FIG 15B**

**FIG 16**

providing a sensor device that comprises at least one sensor element and an angle calculator ⌐1701

a) obtaining at least one sensor signal from said at least one sensor element ⌐1702

b) digitizing at least one signal derived from said at least one sensor signal, to obtain at least one digitized signal ⌐1703

c) applying at least one first input value (IN1) derived from said at least one digitized signal, to the angle calculator, and obtaining a first angle value (α) from the angle calculator ⌐1704

d) applying at least one second input value (IN2) derived from said at least one digitized signal, to the angle calculator, and obtaining a second angle value (β) from the angle calculator, the first and second input value (IN1, IN2) having a first predefined relationship ⌐1705

e) performing a consistency check of the first angle value (α) and the second angle value (β), taking into account said known relationship ⌐1706

f) detecting an error of the angle calculator based on an outcome of the consistency test. ⌐1707

g) providing one or more of the first angle value (α), the second angle value (β), and a diagnostic signal, as an output ⌐1708

↗
1700
**FIG 17**

providing a sensor device that comprises at least two sensor elements including a first and a second sensor element, and an angle calculator

1801

a) obtaining a first sensor signal (e.g. v1) from the first sensor element (e.g. V1) and obtaining a second sensor signal (e.g. v2) from the second sensor element (e.g. V2)

1802

b) digitizing the first and second sensor signal to obtain a first and second digital sensor value

1803

c) calculating a first ratio (e.g. R1) by dividing the first digital sensor value by the second digital sensor value, and applying the first ratio (e.g. R1) as a first input (IN1) to the angle calculator, and obtaining a first angle value (α) from the angle calculator

1804

d) calculating a second ratio (e.g. R2) by dividing the second digital sensor value by the first digital sensor value, and applying the second ratio (e.g. R2) as a second input (IN2) to the angle calculator, and obtaining a second angle value (β) from the angle calculator

1805

e) performing a consistency check of the first angle value (α) and the second angle value (β), taking into account that the second ratio (e.g. R2) is the inverse of the first ratio (e.g. R1)

1806

f) detecting an error of the angle calculator based on an outcome of the consistency test.

1807

g) providing one or more of the first angle value (α), the second angle value (β), and a diagnostic signal, as an output

1808

↗
1800

FIG 18

providing a sensor device that comprises one or more sensor elements and an angle calculator  1901

a) obtaining one or more sensor signals from said one or more sensor elements  1902

b) digitizing one or more signals derived from said one or more sensor signals, to obtain one or more digitized signals  1903

h) calculating a first and a second input value (IN1, IN2) from said one or more digitized signals, the first and second input value (IN1, IN2) having a first predefined relationship, e.g. IN2=1/IN1,
or e.g. IN2=(2*IN1)/(1-IN1*IN1),
or e.g. IN2=[sqrt(IN1*IN1+1)-1]/(2*IN1)  1909

c) applying the first input value (IN1) to the angle calculator, and obtaining a first angle value (α) from the angle calculator  1904

d) applying the second input value (IN2) to the angle calculator, and obtaining a second angle value (β) from the angle calculator  1905

e) performing a consistency check of the first angle value (α) and the second angle value (β), taking into account said first predefined relationship  1906

f) detecting an error of the angle calculator based on an outcome of the consistency test  1907

g) providing one or more of the first angle value (α), the second angle value (β), and a diagnostic signal, as an output  1908

1900

# FIG 19

providing a sensor device that comprises a first group of at least four horizontal Hall elements (e.g. H4-H7) located on a virtual circle having a centre, and a second group of at least two magnetic sensor elements (e.g. V1, V2) arranged substantially at that centre; and an angle calculator

2001

a) obtaining at least four sensor signals (h4, h5, h6, h7) from said first group of magnetic sensor elements located on the circle, and obtaining at least two sensor signals (v1, v2) from said second group of magnetic sensor elements located at the centre

2002

b) determining two magnetic field gradients (dBz/du, dBz/dv) derived from the signals obtained from the first group of sensors, and determining two orthogonal magnetic field components (Bx, By) derived from the signals obtained from the second group of sensors

2003

c) determining a first input value (IN1) as a ratio of the two magnetic field components (Bx, By), and applying the first input value (IN1) to the angle calculator, and obtaining a first angle value (α) from the angle calculator

2004

d) determining a second input value (IN2) as a ratio of the two magnetic field gradients (dBz/du, dBz/dv), and applying the second input value (IN2) to the angle calculator, and obtaining a second angle value (β) from the angle calculator

2005

e) performing a consistency check of the first angle value (α) and the second angle value (β), taking into account relative positions of the sensor elements

2006

f) detecting an error of the angle calculator based on an outcome of the consistency test.

2007

g) providing one or more of the first angle value (α), the second angle value (β), and a diagnostic signal, as an output

2008

2000

**FIG 20**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012074972 A
- US 2022404438 A1
- US 2018188071 A1